# EUROPEAN PATENT SPECIFICATION

(11) **EP 3 576 359 B1**
(45) Date of publication and mention of the grant of the patent: **25.08.2021**
(21) Application number: 18766710.0
(22) Date of filing: 05.03.2018
(51) Int. Cl.: H04L 12/911, G06F 9/50, G06F 9/455, H04L 12/715, H04L 12/24

(54) **METHOD AND DEVICE FOR VOLUME EXPANSION OF VIRTUAL NETWORK FUNCTION**
VERFAHREN UND VORRICHTUNG ZUR VOLUMENERWEITERUNG EINER VIRTUELLEN NETZWERKFUNKTION
DISPOSITIF ET PROCÉDÉ D'EXPANSION DE VOLUME DE FONCTION DE RÉSEAU VIRTUEL

(30) Priority: 15.03.2017 CN 201710151953
(43) Date of publication of application: 04.12.2019
(73) Proprietor: Huawei Technologies Co., Ltd., Longgang District Shenzhen, Guangdong 518129 (CN)
(72) Inventor: HU, Lin, Shenzhen Guangdong 518129 (CN); LI, Long, Shenzhen Guangdong 518129 (CN); YU, Hongfang, Chengdu Sichuan 611731 (CN)
(74) Representative: Goddar, Heinz J.
(86) International application number: PCT/CN2018/077973
(87) International publication number: WO 2018/166366

(56) References cited:
- WO-A1-2015/126430
- WO-A1-2017/054197
- CN-A- 104 011 685
- CN-A- 106 161 076
- CN-A- 106 301 829
- CN-A- 106 487 553
- - European Telecommunications Standards Institute (etsi),: "Network Functions Virtualisation (NFV); Management and Orchestration", ETSI GS NFV-MAN 001 V1.1.1 (2014-12), 1 December 2014 (2014-12-01), pages 1-184, XP055366912, Retrieved from the Internet: URL:http://www.etsi.org/deliver/etsi_gs/NF V-MAN/001_099/001/01.01.01_60/gs_NFV-MAN00 1v010101p.pdf [retrieved on 2017-04-24]

## Description

### TECHNICAL FIELD

This application relates to the communications field, and more specifically, to a virtualized network function scale-out method and apparatus.

### BACKGROUND

According to a network functions virtualization (Network Function Virtualization, NFV) technology, some network functions may be implemented on universal hardware by using software. For example, in a telecommunications network, some telecommunications network functions may be implemented in a universal cloud server, a universal switch, and a universal storage by using the NFV technology, thereby implementing rapid and efficient network service deployment.

In an NFV architecture environment, when a local failure occurs in a system, if scale-out processing is not performed, an impact range becomes increasingly large, causing failure propagation and cascading failures. Consequently, the entire system fails.

WO 2015/126430 A1 discloses a method of managing virtual network functions for a network, including creating for up to all virtual network function component (VNFC) types a number of deactivated VMs having application software, monitoring at least one performance level of the virtual network function (VNF), and scaling-out the VNF by activating a number of deactivated VMs of a number of VNFC types when the at least one performance level reaches a scale-out threshold.

European Telecommunications Standards Institute (etsi): "Network Functions Virtualisation (NFV); Management and Orchestration", ETSI GS NFV-MAN 001 V1.1.1 (2014-12), discloses the management and orchestration framework required for the provisioning of virtualised network functions (VNF) information elements, interfaces, provisioning, configuration, and operational management, including interworking with existing operations and management systems.

### SUMMARY

This invention is defined by the appended claims.

The invention provides virtualized network function (Virtualized Network Function, VNF) scale-out methods of claims 1 and 11 and apparatuses of claims 16 and 26, to reduce a risk that an entire system fails when the system is faulty. Further implementations are disclosed in the dependent claims.

According to a first aspect, a virtualized network function scale-out method is provided. The method includes: determining, by a management and orchestration (Management and Orchestration, MANO) when a delay of a response to a request of a user accessing a first virtualized network function (Virtualized Network Function, VNF) exceeds a tolerance time of the user and a second VNF cannot satisfy a requirement of a user accessing the second VNF, that the first VNF and the second VNF satisfy a joint scale-out condition, where the second VNF is a downstream VNF of the first VNF; and scaling out, by the MANO, the first VNF and the second VNF concurrently.

The "joint scale-out condition " is literally understood as a combined scale-out condition. In other words, when the first VNF satisfies a scale-out condition, the second VNF also satisfies the scale-out condition. "Concurrently" means that a process of scaling out the first VNF and a process of scaling out the second VNF may completely overlap or partially overlap.

A scale-out principle is performing scale-out depending on whether a delay of a response to a request of a user satisfies a requirement. In practice, if a delay exceeds a tolerance time of a user, scale-out processing may be performed, to improve user experience.

When the first VNF and the second VNF satisfy the joint scale-out condition, the first VNF and the second VNF are concurrently scaled out, to shorten duration in which a response time of a service function chain SFC becomes slow and improve overall availability.

In a possible implementation, the determining, by a management and orchestration MANO when a delay of a response to a request of a user accessing a first virtualized network function VNF exceeds a tolerance time of the user and a second VNF cannot satisfy a requirement of a user accessing the second VNF, that the first VNF and the second VNF satisfy a joint scale-out condition includes: determining, by the MANO when the delay of the response to the request of the user accessing the first VNF is in strong positive correlation with a key performance indicator (Key Performance Indicators, KPI) of the first VNF and a delay of a response to a request of the user accessing the second VNF is in weak positive correlation with a KPI of the second VNF, that the first VNF and the second VNF satisfy the joint scale-out condition.

Usually, whether the delay of the response to the request of the user accessing the first virtualized network function VNF exceeds the tolerance time of the user and whether the second VNF does not satisfy the requirement of the user accessing the second VNF may be determined by obtaining a threshold or a range by fitting a relationship between the KPI of the first VNF and the delay of the response to the request of the user accessing the first VNF and a relationship between the KPI of the second VNF and the delay of the response to the request of the user accessing the second VNF.

That the delay of the response to the request of the user accessing the first VNF is in strong positive correlation with the KPI of the first VNF means that when the KPI of the first VNF increases, the delay of the response to the request of the user accessing the first VNF significantly increases.

That the delay of the response to the request of the user accessing the second VNF is in weak positive correlation with the KPI of the second VNF means that when the KPI of the second VNF increases, the delay of the response to the request of the user accessing the second VNF slowly increases.

In a possible implementation, the method further includes: obtaining, by the MANO, the KPI of the first VNF and the KPI of the second VNF for a plurality of times; and determining, by the MANO depending on a change in the KPI of the first VNF and a change in the KPI of the second VNF, that the delay of the response to the request of the user accessing the first VNF is in strong positive correlation with the KPI of the first VNF and the delay of the response to the request of the user accessing the second VNF is in weak positive correlation with the KPI of the second VNF.

In a possible implementation, the determining, by the MANO when the delay of the response to the request of the user accessing the first VNF is in strong positive correlation with a key performance indicator KPI of the first VNF and a delay of a response to a request of the user accessing the second VNF is in weak positive correlation with a KPI of the second VNF, that the first VNF and the second VNF satisfy the joint scale-out condition includes: obtaining, by the MANO, the KPI of the first VNF for a plurality of times; determining, by the MANO depending on a change in the first VNF, that the delay of the response to the request of the user accessing the first VNF is in strong positive correlation with the KPI of the first VNF; sending, by the MANO, scale-out notification information to the second VNF, where the scale-out notification information is used to notify the second VNF that the delay of the response to the request of the user accessing the first VNF is in strong positive correlation with the KPI of the first VNF; receiving, by the MANO, a scale-out request sent by the second VNF based on the scale-out notification information, where the scale-out request is used to indicate that the delay of the response to the request of the user accessing the second VNF is in weak positive correlation with the KPI of the second VNF; and determining, by the MANO based on the scale-out request, that the first VNF and the second VNF satisfy the joint scale-out condition.

Both the first VNF and the second VNF may be directly scaled out when it is determined that the delay of the response to the request for accessing the first VNF exceeds the tolerance time of the user. Alternatively, both the first VNF and the second VNF may be scaled out when it is determined that the delay of the response to the request for accessing the first VNF exceeds the tolerance time of the user and it is determined that the second VNF does not satisfy the requirement of the access user.

The second VNF is scaled out in advance, to improve the overall availability and achieve advance prevention.

When it is determined that the delay of the response to the request for accessing the first VNF exceeds the tolerance time of the user, it may also be determined that the second VNF and a third VNF do not satisfy requirements of access users. The third VNF is a downstream VNF of the second VNF, and so on. A plurality of VNFs may be concurrently scaled out.

The KPI includes a resource KPI and/or a service KPI, the resource KPI is used to indicate a resource usage of the first VNF, and the service KPI is used to indicate a percentage of a quantity of users currently accessing the first VNF in a maximum quantity of users that the first VNF can tolerate.

The resource KPI includes at least one of the following information: a central processing unit (Central Processing Unit, CPU) usage, a memory usage, a magnetic disk usage, and a network bandwidth usage.

In a possible implementation, the determining, by the MANO depending on a change in the first VNF, that the delay of the response to the request of the user accessing the first VNF is in strong positive correlation with the KPI of the first VNF includes: determining, by the MANO depending on a change in the resource KPI of the first VNF, that the delay of the response to the request of the user accessing the first VNF is in strong positive correlation with the resource KPI of the first VNF; or determining, by the MANO depending on a change in the service KPI of the first VNF, that the delay of the response to the request of the user accessing the first VNF is in strong positive correlation with the service KPI of the first VNF.

The relationship between the delay of the response to the request of the user accessing the VNF and the resource KPI and the service KPI may alternatively be simulated depending on a change in a weighted average of the resource KPI and the service KPI.

In a possible implementation, the method further includes: obtaining, by the MANO when determining that the delay of the response to the request of the user accessing the first VNF is in strong positive correlation with the KPI of the first VNF, a quantity of users accessing the first VNF and a quantity of service function chains (Service Function Chain, SFC) passing through the second VNF; determining, by the MANO based on the quantity of users, a resource satisfying the quantity of users; and determining, by the MANO based on the quantity of SFCs, a resource satisfying the quantity of SFCs. The scaling out, by the MANO, the first VNF and the second VNF concurrently includes: scaling out, by the MANO, the first VNF and the second VNF concurrently based on the resource satisfying the quantity of users and the resource satisfying the quantity of SFCs.

The SFC is an SFC affected by an increase in a quantity of requests of the user accessing the first VNF.

The resource includes at least one of the following information: a quantity of virtual machines, a quantity of chips, a memory size, a hard disk size, and a network interface card size.

A quantity of virtual machines required by the first VNF may be determined based on the quantity of users accessing the first VNF, or a quantity of virtual machines required by the second VNF may be determined based on the quantity of SFCs passing through the second VNF. The quantity of virtual machines required by the second VNF may be equal to the quantity of SFCs.

A scale-out size of the downstream VNF is determined depending on the affected SFC, to implement scale-out without wasting resources.

The method further includes: receiving, by the MANO, scale-out alarm information of the first VNF; and determining, by the MANO based on the scale-out alarm information, that the delay of the response to the request of the user accessing the first VNF exceeds the tolerance time of the user.

The method further includes: sending, by the MANO, scale-out success information to the first VNF and/or the second VNF. The scale-out success information is used to indicate that the MANO has scaled out the first VNF and/or the second VNF.

According to a second aspect, a virtualized network function scale-out method is provided. The method includes: receiving, by a second virtualized network function VNF, scale-out notification information sent by a management and orchestration MANO, where the scale-out notification information is used to indicate that a delay of a response to a request of a user accessing a first VNF exceeds a tolerance time of the user, and the second VNF is a downstream VNF of the first VNF; after receiving the scale-out notification information, determining, by the second VNF, that the second VNF cannot satisfy a requirement of a user accessing the second VNF; and sending, by the second VNF, a scale-out request to the MANO, where the scale-out request is used by the MANO to determine that the first VNF and the second VNF satisfy a joint scale-out condition.

After receiving the scale-out notification information, the scale-out request is immediately reported to the MANO, so that the MANO can rapidly decide to perform joint scale-out, thereby shortening duration in which a response time of a service function chain SFC becomes slow and improving overall availability.

In a possible implementation, the scale-out notification information is specifically used to indicate that the delay of the response to the request of the user accessing the first VNF is in strong positive correlation with a key performance indicator KPI of the first VNF. The determining, by the second VNF, that the second VNF cannot satisfy a requirement of a user accessing the second VNF includes: determining, by the second VNF when a delay of a response to a request of the user accessing the second VNF is in weak positive correlation with a KPI of the second VNF, that the second VNF cannot satisfy the requirement of the user accessing the second VNF.

The KPI includes a resource KPI and/or a service KPI, the resource KPI is used to indicate a resource usage of the first VNF, and the service KPI is used to indicate a percentage of a quantity of users currently accessing the first VNF in a maximum quantity of users that the first VNF can tolerate.

In a possible implementation, the method further includes: obtaining, by the second VNF, a resource KPI or a service KPI of the second VNF for a plurality of times; and determining, by the second VNF depending on a change in the resource KPI of the second VNF, that the delay of the response to the request of the user accessing the second VNF is in weak positive correlation with the resource KPI of the second VNF; or determining, by the second VNF depending on a change in the service KPI of the second VNF, that the delay of the response to the request of the user accessing the second VNF is in weak positive correlation with the service KPI of the second VNF.

The resource KPI includes at least one of the following information: a central processing unit CPU usage, a memory usage, a magnetic disk usage, and a network bandwidth usage.

The method further includes: receiving, by the second VNF, scale-out success information sent by the MANO. The scale-out success information is used to indicate that the MANO has scaled out the second VNF.

According to a third aspect, an apparatus is provided. The apparatus is configured to perform the method in the first aspect or any possible implementation of the first aspect. Specifically, the apparatus includes a unit configured to perform the method in the first aspect or any possible implementation of the first aspect.

According to a fourth aspect, an apparatus is provided. The apparatus is configured to perform the method in the second aspect or any possible implementation of the second aspect. Specifically, the apparatus includes a unit configured to perform the method in the second aspect or any possible implementation of the second aspect.

These aspects or other aspects of this application are more concise and easily understandable in descriptions in the following embodiments.

### BRIEF DESCRIPTION OF DRAWINGS

FIG. 1 is a schematic diagram of an NFV-based network architecture according to an embodiment of this application;
FIG. 2 is a schematic block diagram of a function service chain SFC in an NFV architecture environment;
FIG. 3 is a schematic block diagram of a virtualized network function scale-out method according to an embodiment of this application;
FIG. 4 is another schematic block diagram of a virtualized network function scale-out method according to an embodiment of this application;
FIG. 5 is still another schematic block diagram of a virtualized network function scale-out method according to an embodiment of this application;
FIG. 6 is a schematic block diagram of a virtualized network function scale-out apparatus according to an embodiment of this application;
FIG. 7 is another schematic block diagram of a virtualized network function scale-out apparatus according to an embodiment of this application;
FIG. 8 is still another schematic block diagram of a virtualized network function scale-out apparatus according to an embodiment of this application; and
FIG. 9 is still another schematic block diagram of a virtualized network function scale-out apparatus according to an embodiment of this application.

### DESCRIPTION OF EMBODIMENTS

The following describes the technical solutions in this application with reference to the accompanying drawings.

Network architectures and service scenarios described in embodiments of this application are for the purpose of more clearly describing the technical solutions in the embodiments of this application, but are not intended to limit the technical solutions provided in the embodiments of this application. A person of ordinary skill in the art may know that as the network architectures evolve and a new service scenario emerges, the technical solutions provided in the embodiments of this application are further applicable to a similar technical problem.

Methods in the embodiments of this application may be applied to an NFV-based network architecture, or may be applied to an application container engine (Docker)-based network architecture, a virtual machine monitor (Virtual Machine Monitor, VMM)-based network architecture, or another virtualized network architecture. The VMM may also be referred to as a hypervisor. The solutions in the embodiments of this application are described below by using the NFV-based network architecture as an example.

NFV is proposed by a telecommunications network operator, and is a technology standard in which various network software functions are borne, with a network virtualization technology, on a large-capacity server, storage, and switch meeting an industry standard. According to the NFV, flexible software loading is implemented, and flexible deployment and configuration in locations such as a data center, a network node, and a client are implemented, thereby accelerating network deployment and adjustment speeds, reducing service deployment complexity, and improving unification, universalization, adaptability, and the like of a network device.

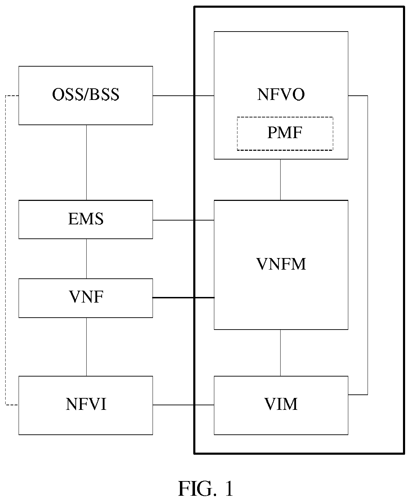

FIG. 1 is a schematic diagram of an NFV-based network architecture according to an embodiment of this application. As shown in FIG. 1, the network architecture includes a network functions virtualization orchestrator (Network Function Virtualization Orchestrator, NFVO), a virtualized network function manager (Virtualized Network Function Manager, VNFM), a virtualized infrastructure manager (Virtualized Infrastructure Manager, VIM), a network functions virtualization infrastructure (Network Function Virtualization Infrastructure, NFVI), a virtualized network function (Virtualized Network Function, VNF), and an element management system (Element Manager System, EMS). The NFVO, the VNFM, and the VIM belong to a management and orchestration (Management and Orchestration, MANO) architecture of an NFV system. In addition, an operations support system/business support system (Operation Support System/Business Support System, OSS/BSS) in the network architecture shown in FIG. 1 is an existing OSS or BSS of an operator.

A virtualization container (Virtualization Container, VC) is a part of a computing node, and is configured to provide an isolated virtualized computing environment. A typical example of the virtualization container is a virtual machine. A virtual machine (Virtual Machine, VM) is a virtual device simulated on a physical device by using virtual machine software. For an application program running in a virtual machine, the virtual machine works as a real physical device. An operating system and an application program may be installed on the virtual machine, and the virtual machine may further access a network resource.

The VNF may also be referred to as a virtualized network element, and corresponds to a physical network function in a conventional non-virtualized network. A functional behavior and a status of a network function are unrelated to virtualization of the network function. The VNF may include a plurality of lower-level components. Optionally, one VNF may be deployed on a plurality of VMs, and each VM bears one virtualized network function component (Virtualized Network Function Component, VNFC). Optionally, one VNF may alternatively be deployed on one VM.

A virtualized network function descriptor (Virtualized Network Function Descriptor, VNFD) is a deployment template of the VNF. Optionally, the VNFD is in one-to-one correspondence to the VNF. The VNFD describes a parameter and a requirement of a virtual resource required for implementing the VNF, and is mainly used to establish a VNF instance and manage a life cycle of the VNF.

The VNFM is mainly configured to manage the life cycle of the VNF instance, including initialization of the VNF instance, scale-out or scale-in of the VNF instance, and termination of the VNF instance.

The EMS is mainly configured to perform conventional fault management, configuration management, accounting management, performance management, and security management (Fault Management, Configuration Management, Accounting Management, Performance Management and Security Management, FCAPS) functions for the VNF. The EMS may exist alone, or may be a VNF having an EMS function.

The VIM is mainly responsible for managing, monitoring, and performing fault reporting on an infrastructure-layer hardware resource and a virtualized resource, and providing a virtualized resource pool for an upper-layer application.

The NFVI provides hardware resources and virtual resources that are used for running of an entire system. The NFVI includes hardware resources (including three parts: computing, network, and storage resources), a virtualization layer (which virtualizes the hardware resources into a resource pool), and virtual resources (also including three parts: computing, network, and storage resources). From a perspective of the VNF, the virtualization layer and the hardware resources appear to be an entity that can provide the required virtual resources.

The NFVO is configured to implement functions of management on a network service descriptor (Network Service Descriptor, NSD), the VNFD, and a virtualized network function forwarding graph (Virtualized Network Function Forwarding Graph, VNFFG), management on a network service (Network Service, NS) life cycle, and a resource global view.

Optionally, the network architecture shown in FIG. 1 may further include a policy management function (Policy Management Function, PMF) unit. The PMF unit is usually deployed in the NFVO. Optionally, in some embodiments, the PMF unit may alternatively be deployed in the OSS or the BSS.

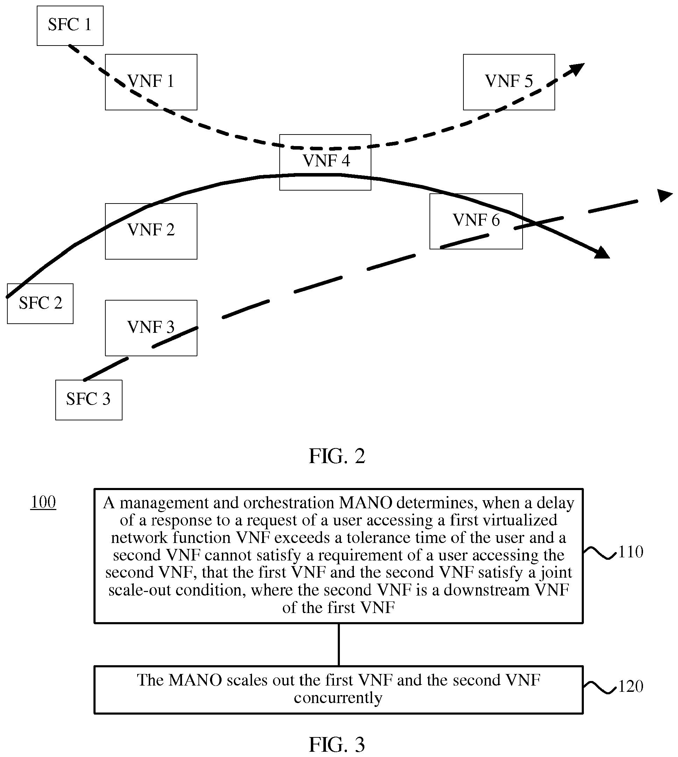

In an NFV architecture environment, cascading failures easily occur. This is characterized in that when a local service capability is inadequate in a system, if scale-out processing is not performed, an impact range becomes increasingly large, causing failure propagation and cascading failures. Consequently, the entire system fails. Using FIG. 2 as an example, there are three function service chains in a network: an SFC 1: VNF 1-VNF 4-VNF 5, an SFC 2: VNF 2-VNF 4-VNF 6, and an SFC 3: VNF 3-VNF 6. An increase in traffic on the VNF 1 causes an increase in traffic processing on the VNF 4. When the traffic processing encounters a bottleneck, if scale-out processing is not performed on the VNF 4, a traffic processing speed of the VNF 2 becomes slow due to a flow control measure. Consequently, cascading failures are caused. A failure is propagated along a flow direction, or along a direction inverse to a flow direction, or from a chain to another SFC through a shared node, causing the cascading failures.

FIG. 3 is a schematic block diagram of a virtualized network function scale-out method 100 according to an embodiment of this application. The method 100 may be performed by an MANO, and may be specifically performed by a VNFM. As shown in FIG. 3, the method 100 mainly includes the following steps.

S110. Determine, when a delay of a response to a request of a user accessing a first virtualized network function VNF exceeds a tolerance time of the user and a second VNF cannot satisfy a requirement of a user accessing the second VNF, that the first VNF and the second VNF satisfy a joint scale-out condition, where the second VNF is a downstream VNF of the first VNF.

S120. Scale out the first VNF and the second VNF concurrently.

The "joint scale-out condition " is literally understood as a combined scale-out condition. In other words, when the first VNF satisfies a scale-out condition, the second VNF also satisfies the scale-out condition. "Concurrently" means that a process of scaling out the first VNF and a process of scaling out the second VNF may completely overlap or partially overlap. For example, scale-out on the first VNF and the second VNF may be simultaneously started and simultaneously ended. Alternatively, scale-out on the first VNF and the second VNF may be simultaneously started, but the scale-out on the first VNF is ended before the scale-out on the second VNF is ended. This is not limited in this application.

A scale-out principle is performing scale-out depending on whether a delay of a response to a request of a user satisfies a requirement. For example, in practice, if a delay exceeds a tolerance time of a user, scale-out processing may be performed, to improve user experience. In this embodiment of this application, when it is determined that a delay of a response to a request of a user of an upstream VNF exceeds a tolerance time of the user, whether a downstream VNF already does not satisfy a requirement of an access user is determined in advance. If yes, the upstream VNF and the downstream VNF may be scaled out concurrently.

Therefore, compared with a conventional solution in which scale-out is performed separately, in the virtualized network function VNF scale-out method in this embodiment of this application, the first VNF and the second VNF are scaled out concurrently when the first VNF and the second VNF satisfy the joint scale-out condition, to shorten duration in which a response time of a service function chain SFC becomes slow and improve overall availability.

A person skilled in the art understands that in a current NFV architecture, an EMS, the MANO, or the VNF can monitor a service usage of the VNF. The service usage may be specifically a resource key performance indicator (Key Performance Indicators, KPI) and/or a service KPI, a load ratio, or the like. Alternatively, a virtualized network function component (Virtualized Network Function Component, VNFC) may be used as a granularity, and one VNF may include a plurality of VNFCs. That is, whether a service usage of a specific instance of a VNFC exceeds a threshold or falls within a range in a plurality of continuous periods may be monitored. In this case, scale-out processing may be performed on the currently monitored VNFC. The threshold is obtained by fitting in advance a relationship between a service usage of a VNF and a delay of a response to a request of a user accessing the VNF. For example, in a range, the service usage of the VNF is in strong positive correlation with the delay of the response to the request of the user accessing the VNF. In other words, when the service usage of the VNF increases, the delay of the response to the request of the user accessing the VNF significantly increases. In another range, the service usage of the VNF is in weak correlation with the delay of the response to the request of the user accessing the VNF. In other words, when the service usage of the VNF increases, the delay of the response to the request of the user accessing the VNF significantly increases.

Optionally, in this embodiment of this application, when the MANO determines that the first VNF and the second VNF satisfy the concurrent scale-out condition, namely, under the condition that both a service usage of the first VNF and a service usage of the second VNF reach a threshold at which a processing speed can be reduced, the MANO may scale out the first VNF and the second VNF concurrently. It should be understood that herein, there may be one or more second VNFs. In other words, the first VNF may have a plurality of downstream VNFs. For example, an SFC passing through a VNF 1 includes an SFC 1 and an SFC 2, the SFC 1 flows from the VNF 1 to a VNF 2, and the SFC 2 flows from the VNF 1 to a VNF 3. In this case, both the VNF 2 and the VNF 3 are referred to as downstream VNFs of the VNF 1.

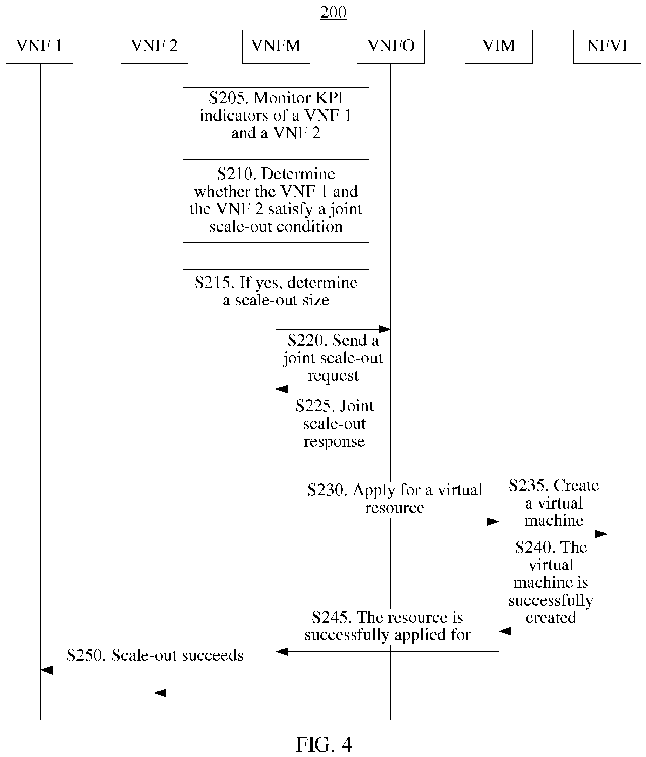

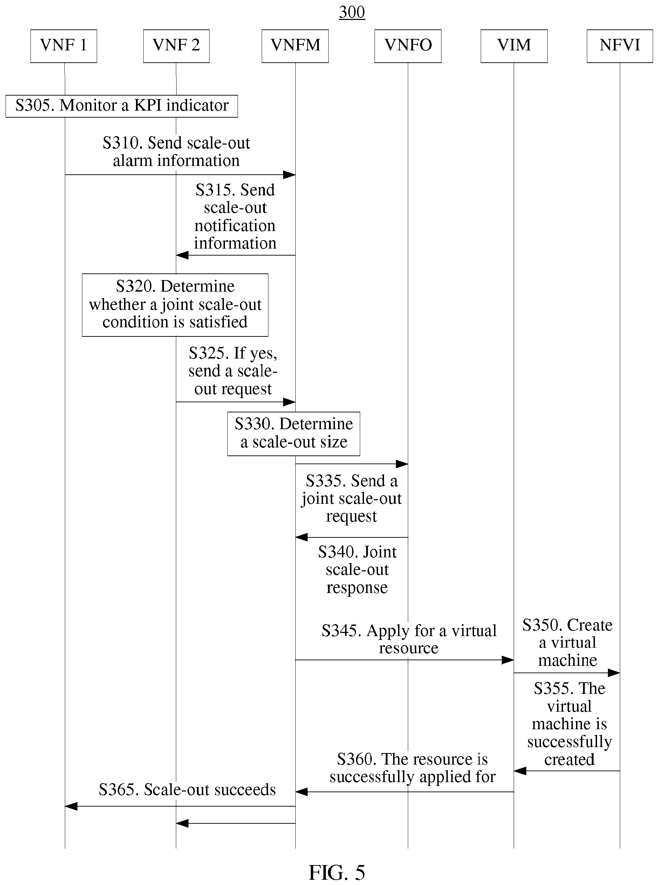

Procedures of virtualized network function scale-out methods 200 and 300 in embodiments of this application are described below in detail with reference to FIG. 4 and FIG. 5. As shown in FIG. 4 and FIG. 5, an NFV architecture is used as an example in both the method 200 and the method 300. As shown in FIG. 4, the method 200 mainly includes the following steps.

S205. A VNFM monitors service usages of all VNFs in an entire network. For example, the VNFM may monitor resource KPI indicators and/or service KPI indicators of a VNF 1 and a VNF 2. The resource KPI may be used to indicate a resource usage of the VNF. The resource usage may be a memory usage, a CPU usage of each VM bearing the VNF, a magnetic disk usage, a network bandwidth usage, or the like. The service KPI may be used to indicate a percentage of a quantity of users currently accessing the VNF in a maximum quantity of users that the VNF can tolerate, for example, a quantity of callers. Monitoring herein means that the VNFM may periodically (for example, every 20s) collect data on a VM of the VNF, or that a monitor agent in the VNF periodically collects data on a VM of the VNF, or that an EMS collects data on a VM of a corresponding VNF and reports the data to the VNFM.

S210. The VNFM compares periodically collected data of a VNF 1 with a preset first threshold. The first threshold may be obtained by fitting a relationship between a delay of a response to a request of a user accessing the VNF 1 and a KPI of the VNF 1. Specifically, the first threshold may be a critical value of the KPI when the delay of the response to the request of the user significantly increases. For example, the VNFM may perform weighted averaging based on data of the VNF 1 that is periodically collected for a plurality of times, or based on a type of KPI of the VNF 1 that is periodically collected for a plurality of times, and if a weighted average is greater than the preset first threshold, may determine that the delay of the response to the request of the user accessing the VNF 1 exceeds a tolerance time of the user. Specifically, the first threshold may be 80%, 75%, or another value. When a service usage reaches a value, a service delay is obviously prolonged. In this case, the value may be set to the first threshold. Usually, the first threshold may be obtained based on experience through a plurality of simulations, or may be estimated through machine learning/big data. Usually, that the delay of the response to the request of the user accessing the VNF 1 exceeds the tolerance time of the user may be related to an SFC or some SFCs served by the VNF. That is, if the VNF 1 provides both a telephone service and an email service, and the VNFM detects, at a moment, that the VNF 1 can bear only some required telephone services, the VNFM may determine to recreate a virtual machine for the VNF 1. In this way, extra telephone services may be transferred to the new virtual machine, and the email service may further be transferred to the new virtual machine, so that an original virtual machine provides only the telephone services. It should be understood that services provided by the newly created virtual machine are not limited in this embodiment of this application. When the VNFM determines that a service capability of the VNF 1 is inadequate, the VNFM does not immediately scale out the VNF 2, but continues to determine whether the VNF 2 does not satisfy a user requirement, namely, to determine whether a service usage of the VNF 2 is greater than the preset first threshold at this moment. If the service usage of the VNF 2 is greater than the preset first threshold, it may be determined that the VNF 1 and the VNF 2 satisfy a joint scale-out condition. In this case, the VNFM may scale out the VNF 2 and the VNF 1 concurrently. The second threshold may be obtained by fitting a relationship between a delay of a response to a request of a user accessing the VNF 2 and a KPI of the VNF 2. Specifically, the second threshold may be a critical value of the KPI when the delay of the response to the request of the user slowly increases. If the VNFM determines that a service usage of the VNF 1 at this moment is less than the preset first threshold, the VNFM may further determine whether the service usage of the VNF 2 is greater than the preset second threshold. If the service usage of the VNF 2 is greater than the preset second threshold, it may also be determined that both the VNF 1 and the VNF 2 satisfy the joint scale-out condition. In other words, the VNFM may also scale out the VNF 2 and the VNF 1 concurrently. When a service usage reaches a value, a service delay is prolonged to some extent but not significantly. In this case, the value may be set as the second threshold. Specifically, the second threshold may be 60%, 50%, or another value. The second threshold is usually less than the first threshold. Similarly, the second threshold may be obtained based on experience through a plurality of simulations, or may be estimated through machine learning/big data.

It should be understood that preset first thresholds of different VNFs may be the same or different, and preset second thresholds of different VNFs may be the same or different. For example, in this embodiment of this application, the first threshold of the VNF 1 and a first threshold of the VNF 2 may be the same or different, and a second threshold of the VNF 1 and the second threshold of the VNF 2 may be the same or different.

Optionally, in this embodiment of this application, after it is determined that the delay of the response to the request of the user accessing the VNF 1 exceeds the tolerance time of the user, in other words, the service usage of the VNF 1 is greater than the first threshold of the VNF 1, whether service usages of the downstream VNF 2 and a downstream VNF 3 of the VNF 2 are both greater than the second threshold may further be determined. If yes, the VNF 1, the VNF 2, and the VNF 3 may be scaled out concurrently. In this way, duration in which an SFC is affected by scale-out is greatly shortened.

Optionally, in this embodiment of this application, a third threshold may further be set. After it is determined that the service usage of the VNF 2 is greater than the preset second threshold, whether a downstream VNF of the VNF 2, namely, a VNF 3, is not to satisfy a user requirement may further be determined. If it is determined that the VNF 3 is not to satisfy the user requirement, the VNF 3, the VNF 2, and the VNF 1 also satisfy the joint scale-out condition. In other words, a scale-out time of the VNF 3 and a scale-out time of the VNF 2 are advanced to be the same as that of the VNF 1. If it is determined that a service usage of the VNF 3 is less than the first threshold, whether the service usage of the VNF 3 is greater than the second threshold may further be determined. If the service usage of the VNF 3 is greater than the second threshold, the VNF 3, the VNF 2, and the VNF 1 also satisfy the joint scale-out condition. If it is determined that the service usage of the VNF 3 is less than the second threshold, whether the service usage of the VNF 3 is greater than the third threshold may further be determined. If the service usage of the VNF 3 is greater than the third threshold, the VNF 3, the VNF 2, and the VNF 1 also satisfy the joint scale-out condition.

In other words, the VNFM may scale out two VNFs concurrently, and when a plurality of VNFs satisfy the joint scale-out condition, the VNFM may scale out the plurality of VNFs concurrently. This is not limited in this embodiment of this application.

In this embodiment of this application, unless otherwise specified, that a delay of a response to a request of a user accessing a VNF exceeds a tolerance time of the user means that a service usage of the VNF is greater than the preset first threshold, namely, a condition for determining whether the VNF needs to be scaled out in an existing NFV architecture.

S215. After determining that the VNF 1 and a VNF 2 satisfy a joint scale-out condition in step S210, the VNFM determines scale-out sizes of the VNF 1 and the VNF 2. The scale-out size may be a quantity of virtual machines, a quantity of chips, a memory size, a hard disk size, a network interface card size, and the like. Specifically, a quantity of users accessing the VNF 1 and a quantity of service function chains SFCs passing through the VNF 2 may be obtained, a resource satisfying the quantity of users is determined based on the quantity of users, and a resource satisfying the quantity of SFCs is determined based on the quantity of SFCs. Optionally, the scale-out size of the VNF 1 may alternatively be determined based on the service usage of the VNF 1, and the scale-out size of the VNF 2 may alternatively be determined based on the service usage of the VNF 2 and a status of an SFC passing through the VNF 2.

How to calculate a scale-out size of an associated VNF based on a service function chain SFC and a VNF is described below in detail. First, the following points are described:
1. Depending on monitoring on a packet receiving rate and a packet sending rate, a memory display program MEM, a CPU, and input/output I/O, whether the VNF provides an inadequate service and whether the SFC is inadequately served may be determined, and a load ratio parameter of the VNF may be obtained.
2. A served status vector of the SFC is T={ti}. When it is detected that an i^{th} SFC is inadequately served on at least one VNF, ti=1. When an i^{th} SFC is effectively served on all VNFs through which the i^{th} SFC passes, and it is detected that the SFC is not inadequately served, ti=0.
3. An SFC matrix G={gij}, where gij indicates whether the i^{th} SFC passes through a j^{th} VNF; and when the i^{th} SFC passes through the j^{th} VNF, gij is 1; or when the i^{th} SFC does not pass through the j^{th} VNF, gij is 0.
4. A load ratio vector of the VNF is V={vj}, where vj indicates a load ratio of the j^{th} VNF.
5. A service capability status vector of the VNF is S={sj}, where sj indicates whether a capability of the j^{th} VNF is inadequate, and when the service capability is inadequate, sj=1. When vj exceeds an upper limit of a threshold, the vector sj is set to 1.
6. Two load ratio thresholds: an upper load limit H_T and a lower load limit L_T (H_T>L_T). The upper load limit H_T and the lower load limit L_T are respectively a normal scale-out threshold (the first threshold described above) and a joint scale-out threshold (the second threshold described above).

A process of calculating a scale-out size of a VNF is described by using FIG. 2 as an example.

G={ 1, 0, 0, 1, 1, 0; 0, 1, 0, 1, 0, 1; 0, 0, 1, 0, 0, 1} and V={v1, v2, v3, v4, v5, v6} are calculated based on a relationship of a service function chain SFC. There are the following two cases considering an actual failure situation.
(1) When the VNF 1 is faulty (when a service capability is inadequate), correspondingly, T={ 1, 0, 0} and S={ 1, 0, 0, 0, 0, 0}. Because s1=1, normal scale-out λ is performed on the VNF 1 first. If a VNF 4 and a VNF 5 satisfy L_T ≤ vj < H_T, a scale-out size is calculated based on Σi ti*gij. The VNF 4 is correspondingly scaled out by one Δ unit (Δ is a unit size of joint scale-out), and the VNF 5 is also correspondingly scaled out by one Δ unit.
(2) When a VNF 4 is faulty (when a service capability is inadequate), correspondingly, T={ 1, 1, 0} and S={0, 1, 0, 0, 0, 0, 0}. Because s2=1, normal scale-out λ is performed on the VNF 4 first, and a scale-out size is calculated based on Σi ti*gij for a VNF 5 and a VNF 6 that satisfy L_T≤vj<H_T. The VNF 5 is correspondingly scaled out by one Δ unit, and the VNF 6 is also correspondingly scaled out by one Δ unit.

In this embodiment of this application, unless otherwise specified, that a service capability of a VNF is inadequate means that a delay of a response to a request of a user accessing the VNF exceeds a tolerance time of the user. In other words, the delay of the response to the request of the access user is in strong positive correlation with a service usage of the VNF.

It should be understood that the foregoing normal scale-out size λ and the unit size Δ of joint scale-out may be a quantity of to-be-created virtual machines. For example, for the foregoing case (1), two virtual machines may be created for the VNF 1, and one virtual machine is created for the VNF 4 and the VNF 5. Specific values of λ and Δ are not limited herein.

It should further be understood that the foregoing load ratio parameter is a specific representation of the service usage, and may alternatively be another parameter that can represent the service usage. This is not limited in this embodiment of this application. In addition, a person skilled in the art understands that in this embodiment of this application, the VNFM can obtain a topology relationship between VNFs and service function chains in the NFV architecture. In other words, the VNFM clearly knows VNFs through which an SFC passes, or SFCs passing through a VNF.

Optionally, in this embodiment of this application, the SFCs may be different services, for example, a telephone service, an email service, or a video service. The SFC may alternatively be an SFC affected by an increase in a quantity of requests of the user accessing the VNF 1. A scale-out size of the downstream VNF is determined depending on the affected SFC, to implement scale-out without wasting resources.

Optionally, in this embodiment of this application, the scale-out size may be a quantity of virtual machines, a quantity of chips, a memory size, a hard disk size, and a network interface card size.

S220. After calculating the scale-out sizes of the VNF 1 and the VNF 2 in S215, similar to a scale-out creation step in the prior art, the VNFM may send a joint scale-out request to a scale-out orchestration module of an NFVO. A difference lies in that the joint scale-out request is a request for concurrently scaling out the VNF 1 and the VNF 2.

S225. After receiving the joint scale-out request sent by the VNFM in S220, the NFVO may adjust resource orchestration depending on an actual situation, and deliver a scale-out response notification to the VNFM.

S230. A scale-out processing module of the VNFM may deliver a specific virtual machine resource request to a VIM. For example, it may be requested to increase a quantity of virtual machines VMs or increase a quantity of CPUs, MEMs, or I/O in each VM.

S235. After receiving the resource request sent by the VNFM, the VIM may initiate a physical resource application to an NFVI, to apply for creation of a virtual machine or allocation of a CPU resource, a MEM resource, or an I/O resource.

S240. After completing the foregoing required virtual machine creation or resource allocation, the NFVI may return a virtual machine creation success response or a resource allocation success response to the VIM.

S245. The VIM may return a resource application success message to the VNFM, so that the VNFM completes VNF deployment.

S250. The VNFM sends a scale-out success message to the VNF 1 and the VNF 2.

As shown in FIG. 5, the method 300 mainly includes the following steps.

S305. A VNF 1 monitors a service usage of the VNF 1, and a VNF 2 monitors a service usage of the VNF 2. Similarly, the VNF 1 and the VNF 2 may respectively monitor their resource KPI indicators and/or service KPI indicators. The resource KPI may be a memory usage, a central processing unit (Central Processing Unit, CPU) usage of each VM bearing the VNF, a magnetic disk usage, a network bandwidth usage, or the like. The service KPI may be a quantity of users, or the like, for example, a quantity of callers. For details, refer to S205, and details are not described herein again.

S310. When detecting that a service capability of the VNF 1 is inadequate, the VNF 1 may send scale-out alarm information to a VNFM. Similarly, the VNF 1 compares periodically collected data with a preset first threshold. If the data is greater than the preset first threshold, it may be determined that the service capability of the VNF 1 is inadequate. Herein, a definition of the inadequate service capability and a value of the first threshold are as described above.

S315. When receiving the scale-out alarm information sent by the VNF 1, the VNFM does not scale out the VNF 1 first, but sends scale-out notification information to a downstream VNF of the VNF 1, namely, the VNF 2 in FIG. 5. The scale-out notification information is used to notify the VNF 2 that the service capability of the VNF 1 is inadequate. The scale-out notification information herein may be used as a condition for triggering the VNF 2 to determine whether the VNF 2 needs to be scaled out.

S320 to S325. After receiving the scale-out notification information sent by the VNFM, the VNF 2 may first determine whether the service usage of the VNF 2 is greater than a second threshold, and if the VNF 2 determines that the service usage of the VNF 2 is less than the second threshold, in other words, the VNF 2 does not need to be scaled out, the VNF 2 may send, to the VNFM, a notification indicating that no scale-out is to be performed, so that the VNFM may scale out only the VNF 1. If within a particular time (the particular time needs to be far less than a time for scaling out the VNF), the VNFM receives no scale-out request sent by the VNF 2, the VNFM may consider that the message is lost, and send scale-out notification information to the VNF 2 again. If the VNF 2 determines that the service usage of the VNF 2 is greater than the second threshold, the VNF 2 sends a scale-out request to the VNFM, to notify the VNFM that the VNF 1 and the VNF 2 satisfy a joint scale-out condition, and that the VNF 1 and the VNF 2 can be scaled out concurrently.

S330. After the VNFM receives the scale-out request sent by the VNF 2, the VNFM may determine that the VNF 1 and the VNF 2 satisfy the joint scale-out condition. In this case, the VNFM may determine scale-out sizes of the VNF 1 and the VNF 2. Processes of calculating the scale-out sizes of the VNF 1 and the VNF 2 are the same as those in the method 200.

S335 to S365. The steps are the same as S220 to S250. For brevity, details are not described herein again.

It should be understood that in the method 200 and the method 300, a service usage for determining whether a VNF satisfies a scale-out condition and a service usage for determining a scale-out size may be obtained simultaneously, or may be obtained at different times. For example, data may be periodically collected on a VM of the VNF, and the period is 20s. If it is determined, at a moment, that the VNF satisfies the scale-out condition, a service usage obtained at this moment may be used to determine the scale-out size, or a service usage of the VNF obtained after 20s may be used to determine the scale-out size. This is not limited in this embodiment of this application.

It should be understood that, in various embodiments of this application, sequence numbers of the foregoing processes do not indicate an execution sequence. The execution sequence of the processes should be determined depending on functions and internal logic of the processes, and should not be construed as any limitation on the implementation processes of the embodiments of this application.

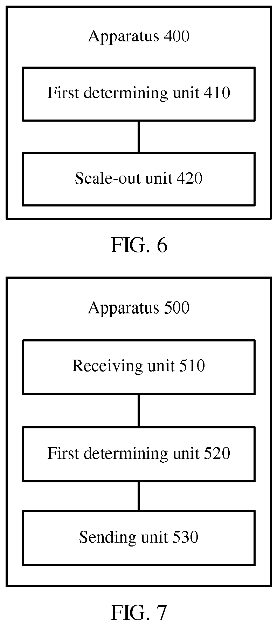

The virtualized network function scale-out methods according to the embodiments of this application are described above in detail. Virtualized network function scale-out apparatuses according to the embodiments of this application are described below with reference to FIG. 6 to FIG. 9. Technical features described in the method embodiments are applicable to the following apparatus embodiments.

FIG. 6 is a schematic block diagram of a virtualized network function scale-out apparatus 400 according to an embodiment of this application. As shown in FIG. 6, the apparatus 400 includes:
a first determining unit 410, configured to: when a delay of a response to a request of a user accessing a first virtualized network function VNF exceeds a tolerance time of the user and a second VNF cannot satisfy a requirement of a user accessing the second VNF, determine that the first VNF and the second VNF satisfy a joint scale-out condition, where the second VNF is a downstream VNF of the first VNF; and
a scale-out unit 420, configured to scale out the first VNF and the second VNF concurrently.

Therefore, based on the virtualized network function scale-out apparatus in this embodiment of this application, duration in which a response time of a service function chain SFC becomes slow can be shortened, and overall availability can be improved.

Optionally, in this embodiment of this application, the first determining unit 410 is specifically configured to: when the delay of the response to the request of the user accessing the first VNF is in strong positive correlation with a key performance indicator KPI of the first VNF and a delay of a response to a request of the user accessing the second VNF is in weak positive correlation with a KPI of the second VNF, determine that the first VNF and the second VNF satisfy the joint scale-out condition.

Optionally, in this embodiment of this application, the apparatus 400 further includes: a first obtaining unit 430, configured to obtain the KPI of the first VNF and the KPI of the second VNF for a plurality of times; and a second determining unit 440, configured to determine, depending on a change in the KPI of the first VNF and a change in the KPI of the second VNF, that the delay of the response to the request of the user accessing the first VNF is in strong positive correlation with the KPI of the first VNF and the delay of the response to the request of the user accessing the second VNF is in weak positive correlation with the KPI of the second VNF.

Optionally, in this embodiment of this application, the first obtaining unit 430 is configured to obtain the KPI of the first VNF for a plurality of times.

The second determining unit 440 is configured to determine, depending on a change in the first VNF, that the delay of the response to the request of the user accessing the first VNF is in strong positive correlation with the KPI of the first VNF. The apparatus 400 further includes: a sending unit 450, configured to send scale-out notification information to the second VNF, where the scale-out notification information is used to notify the second VNF that the delay of the response to the request of the user accessing the first VNF is in strong positive correlation with the KPI of the first VNF; and a receiving unit 460, configured to receive a scale-out request sent by the second VNF based on the scale-out notification information, where the scale-out request is used to indicate that the delay of the response to the request of the user accessing the second VNF is in weak positive correlation with the KPI of the second VNF. The first determining unit 410 is specifically configured to determine, based on the scale-out request, that the first VNF and the second VNF satisfy the joint scale-out condition.

Optionally, in this embodiment of this application, the KPI includes a resource KPI and/or a service KPI, the resource KPI is used to indicate a resource usage of the first VNF, and the service KPI is used to indicate a percentage of a quantity of users currently accessing the first VNF in a maximum quantity of users that the first VNF can tolerate.

Optionally, in this embodiment of this application, the second determining unit 440 is specifically configured to: determine, depending on a change in the resource KPI of the first VNF, that the delay of the response to the request of the user accessing the first VNF is in strong positive correlation with the resource KPI of the first VNF; or determine, depending on a change in the service KPI of the first VNF, that the delay of the response to the request of the user accessing the first VNF is in strong positive correlation with the service KPI of the first VNF.

Optionally, in this embodiment of this application, the resource KPI includes at least one of the following information: a central processing unit CPU usage, a memory usage, a magnetic disk usage, and a network bandwidth usage.

Optionally, in this embodiment of this application, the apparatus 400 further includes: a second obtaining unit 470, configured to: when it is determined that the delay of the response to the request of the user accessing the first VNF is in strong positive correlation with the KPI of the first VNF, obtain a quantity of users accessing the first VNF and a quantity of service function chains SFCs passing through the second VNF; and a third determining unit 480, configured to: determine, based on the quantity of users, a resource satisfying the quantity of users; and determine, based on the quantity of SFCs, a resource satisfying the quantity of SFCs. The scale-out unit 420 is specifically configured to scale out the first VNF and the second VNF concurrently based on the resource satisfying the quantity of users and the resource satisfying the quantity of SFCs.

Optionally, in this embodiment of this application, the SFC is an SFC affected by an increase in a quantity of requests of the user accessing the first VNF.

Optionally, in this embodiment of this application, the resource includes at least one of the following information: a quantity of virtual machines, a quantity of chips, a memory size, a hard disk size, and a network interface card size.

It should be understood that the virtualized network function scale-out apparatus 400 in this embodiment of this application may correspond to the MANO in the method embodiments of this application, and the foregoing and other operations and/or functions of the units in the apparatus 400 are separately intended to implement corresponding procedures of the MANO or the VNFM in the methods shown in FIG. 3 to FIG. 5. For brevity, details are not described herein again.

FIG. 7 is a schematic block diagram of a virtualized network function scale-out apparatus 500 according to an embodiment of this application. As shown in FIG. 7, the apparatus 500 includes:
a receiving unit 510, configured to receive scale-out notification information sent by a management and orchestration MANO, where the scale-out notification information is used to indicate that a delay of a response to a request of a user accessing a first VNF exceeds a tolerance time of the user, and a second VNF is a downstream VNF of the first VNF;
a first determining unit 520, configured to: after the scale-out notification information is received, determine that the second VNF cannot satisfy a requirement of a user accessing the second VNF; and
a sending unit 530, configured to send a scale-out request to the MANO, where the scale-out request is used by the MANO to determine that the first VNF and the second VNF satisfy a joint scale-out condition.

Therefore, based on the virtualized network function scale-out apparatus in this embodiment of this application, duration in which a response time of a service function chain SFC becomes slow can be shortened, and overall availability can be improved.

Optionally, in this embodiment of this application, the scale-out notification information is specifically used to indicate that the delay of the response to the request of the user accessing the first VNF is in strong positive correlation with a key performance indicator KPI of the first VNF. The first determining unit 520 is specifically configured to: when a delay of a response to a request of the user accessing the second VNF is in weak positive correlation with a KPI of the second VNF, determine that the second VNF cannot satisfy the requirement of the user accessing the second VNF.

Optionally, in this embodiment of this application, the KPI includes a resource KPI and/or a service KPI, the resource KPI is used to indicate a resource usage of the first VNF, and the service KPI is used to indicate a percentage of a quantity of users currently accessing the first VNF in a maximum quantity of users that the first VNF can tolerate.

Optionally, in this embodiment of this application, the apparatus 500 further includes: an obtaining unit 540, configured to obtain a resource KPI or a service KPI of the second VNF for a plurality of times; and a second determining unit 550, configured to: determine, depending on a change in the resource KPI of the second VNF, that the delay of the response to the request of the user accessing the second VNF is in weak positive correlation with the resource KPI of the second VNF; or determine, depending on a change in the service KPI of the second VNF, that the delay of the response to the request of the user accessing the second VNF is in weak positive correlation with the service KPI of the second VNF.

Optionally, in this embodiment of this application, the resource KPI includes at least one of the following information: a central processing unit CPU usage, a memory usage, a magnetic disk usage, and a network bandwidth usage.

It should be understood that the virtualized network function scale-out apparatus 500 in this embodiment of this application may correspond to the second VNF in the method embodiments of this application, and the foregoing and other operations and/or functions of the units in the apparatus 500 are separately intended to implement corresponding procedures of the second VNF in the methods shown in FIG. 4 and FIG. 5. For brevity, details are not described herein again.

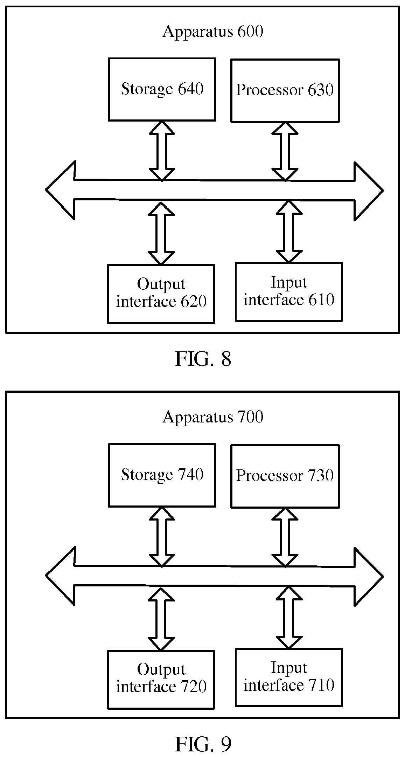

As shown in FIG. 8, an embodiment of this application further provides a virtualized network function scale-out apparatus 600. The apparatus 600 may be the apparatus 400 in FIG. 6, and may be configured to perform the steps of the MANO that correspond to the methods in FIG. 3 to FIG. 5. The apparatus 600 includes an input interface 610, an output interface 620, a processor 630, and a storage 640. The input interface 610, the output interface 620, the processor 630, and the storage 640 may be connected by using a bus system. The storage 640 is configured to store a program, an instruction, or code. The processor 630 is configured to execute the program, the instruction, or the code in the storage 640 to: control the input interface 610 to receive a signal, control the output interface 620 to send a signal, and complete operations in the foregoing method embodiments, for example, operations in S205, S210, and S215.

Therefore, based on the virtualized network function scale-out apparatus in this embodiment of this application, duration in which a response time of a service function chain SFC becomes slow can be shortened, and overall availability can be improved.

It should be understood that in this embodiment of this application, the processor 630 may be a CPU, or the processor 630 may be another general purpose processor, a digital signal processor, an application-specific integrated circuit, a field-programmable gate array or another programmable logic device, a discrete gate or a transistor logic device, a discrete hardware component, or the like. The general purpose processor may be a microprocessor, or the processor may be any conventional processor or the like.

The storage 640 may include a read-only memory and a random access memory, and provide an instruction and data for the processor 630. Apart of the storage 640 may further include a non-volatile random access memory. For example, the storage 640 may further store information about a device type.

In an implementation process, the steps in the foregoing methods may be performed by using an integrated logic circuit of hardware in the processor 630 or an instruction in a form of software. The steps of the methods disclosed with reference to the embodiments of this application may be directly performed and completed by a hardware processor, or may be performed and completed by using a combination of hardware and software modules in the processor. The software module may be located in a mature storage medium in the art, such as a random access memory, a flash memory, a read-only memory, a programmable read-only memory, an electrically erasable programmable memory, or a register. The storage medium is located in the storage 640, and the processor 630 reads information in the storage 640 and performs the steps in the foregoing methods in combination with the hardware of the processor 630. To avoid repetition, details are not described herein again.

In a specific implementation, the first determining unit 410, the scale-out unit 420, the first obtaining unit 430, the second determining unit 440, the second obtaining unit 460, and the third determining unit 470 in FIG. 6 may be implemented by the processor 630 in FIG. 8, the sending unit 450 may be implemented by the output interface 620 in FIG. 8, and the receiving unit 460 may be implemented by the input interface 610 in FIG. 8.

As shown in FIG. 9, an embodiment of this application further provides a virtualized network function scale-out apparatus 700. The apparatus 700 may be the apparatus 700 in FIG. 7, and may be configured to perform the steps of the second VNF that correspond to the methods in FIG. 4 and FIG. 5. The apparatus 700 includes an input interface 710, an output interface 720, a processor 730, and a storage 740. The input interface 710, the output interface 720, the processor 730, and the storage 740 may be connected by using a bus system. The storage 740 is configured to store a program, an instruction, or code. The processor 730 is configured to execute the program, the instruction, or the code in the storage 740 to: control the input interface 710 to receive a signal, control the output interface 720 to send a signal, and complete operations in the foregoing method embodiments, for example, operations in S305, S320, and S325.

Therefore, based on the virtualized network function scale-out apparatus in this embodiment of this application, duration in which a response time of a service function chain SFC becomes slow can be shortened, and overall availability can be improved.

It should be understood that in this embodiment of this application, the processor 730 may be a CPU, or the processor 730 may be another general purpose processor, a digital signal processor, an application-specific integrated circuit, a field-programmable gate array or another programmable logic device, a discrete gate or a transistor logic device, a discrete hardware component, or the like. The general purpose processor may be a microprocessor, or the processor may be any conventional processor or the like.

The storage 740 may include a read-only memory and a random access memory, and provide an instruction and data for the processor 730. Apart of the storage 740 may further include a non-volatile random access memory. For example, the storage 740 may further store information about a device type.

In an implementation process, the steps in the foregoing methods may be performed by using an integrated logic circuit of hardware in the processor 730 or an instruction in a form of software. The steps of the methods disclosed with reference to the embodiments of this application may be directly performed and completed by a hardware processor, or may be performed and completed by using a combination of hardware and software modules in the processor. The software module maybe located in a mature storage medium in the art, such as a random access memory, a flash memory, a read-only memory, a programmable read-only memory, an electrically erasable programmable memory, or a register. The storage medium is located in the storage 740, and the processor 730 reads information in the storage 740 and performs the steps in the foregoing methods in combination with the hardware of the processor 730. To avoid repetition, details are not described herein again.

In a specific implementation, the first determining unit 520 and the obtaining unit 540 in FIG. 7 may be implemented by the processor 730 in FIG. 9, the sending unit 530 may be implemented by the output interface 720 in FIG. 9, and the first receiving unit 510 and the second receiving unit 550 may be implemented by the input interface 710 in FIG. 9.

This application further provides a system, including an MANO, a first VNF, and a second VNF. The MANO may be the apparatus in the embodiment corresponding to FIG. 6 or the apparatus provided in the embodiment corresponding to FIG. 8. The second VNF may be the apparatus in the embodiment corresponding to FIG. 7 or the apparatus provided in the embodiment corresponding to FIG. 9. The communications system is configured to perform the method in the embodiment corresponding to FIG. 2 or FIG. 3.

A person of ordinary skill in the art may be aware that, the units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the system, apparatus, and unit, reference may be made to a corresponding process in the method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the shown or discussed mutual couplings or direct couplings or communication connections may be implemented by using some interfaces. The indirect couplings or communication connections between the apparatuses or units may be implemented in electrical, mechanical, or other forms.

The units described as separate parts may or may not be physically separated, and parts shown as units may or may not be physical units, may be located in one position, or may be distributed on multiple network units. Some or all of the units may be selected based on actual needs to achieve the objectives of the solutions of the embodiments.

In addition, functional units in the embodiments of this application may be integrated into one processing unit, or each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in the embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A virtualized network function scale-out method, comprising:
determining (110), by a management and orchestration, MANO, when a delay of a response to a request of a user accessing a first virtualized network function, VNF, exceeds a tolerance time of the user and a second VNF cannot satisfy a requirement of a user accessing the second VNF, that the first VNF and the second VNF satisfy a joint scale-out condition, wherein the second VNF is a downstream VNF of the first VNF, the joint scale-out condition indicates the first VNF and the second VNF satisfy scale-out condition; and
scaling out (120), by the MANO, the first VNF and the second VNF, wherein a process of scaling out the first VNF and a process of scaling out the second VNF completely overlap or partially overlap.

2. The method according to claim 1, wherein the determining (110), by a management and orchestration, MANO, when a delay of a response to a request of a user accessing a first virtualized network function, VNF, exceeds a tolerance time of the user and a second VNF cannot satisfy a requirement of a user accessing the second VNF, that the first VNF and the second VNF satisfy a joint scale-out condition comprises:
determining, by the MANO when the delay of the response to the request of the user accessing the first VNF is in strong positive correlation with a key performance indicator KPI of the first VNF and a delay of a response to a request of the user accessing the second VNF is in weak positive correlation with a KPI of the second VNF, that the first VNF and the second VNF satisfy the joint scale-out condition.

3. The method according to claim 2, wherein the method further comprises:
obtaining, by the MANO, the KPI of the first VNF and the KPI of the second VNF for a plurality of times; and
determining, by the MANO depending on a change in the KPI of the first VNF and a change in the KPI of the second VNF, that the delay of the response to the request of the user accessing the first VNF is in strong positive correlation with the KPI of the first VNF and the delay of the response to the request of the user accessing the second VNF is in weak positive correlation with the KPI of the second VNF.

4. The method according to claim 2, wherein the determining (110), by the MANO when the delay of the response to the request of the user accessing the first VNF is in strong positive correlation with a key performance indicator KPI of the first VNF and a delay of a response to a request of the user accessing the second VNF is in weak positive correlation with a KPI of the second VNF, that the first VNF and the second VNF satisfy the joint scale-out condition comprises:
obtaining, by the MANO, the KPI of the first VNF for a plurality of times;
determining, by the MANO depending on a change in the KPI of the first VNF, that the delay of the response to the request of the user accessing the first VNF is in strong positive correlation with the KPI of the first VNF;
sending, by the MANO, scale-out notification information to the second VNF, wherein the scale-out notification information is used to notify the second VNF that the delay of the response to the request of the user accessing the first VNF is in strong positive correlation with the KPI of the first VNF;
receiving, by the MANO, a scale-out request sent by the second VNF based on the scale-out notification information, wherein the scale-out request is used to indicate that the delay of the response to the request of the user accessing the second VNF is in weak positive correlation with the KPI of the second VNF; and
determining, by the MANO based on the scale-out request, that the first VNF and the second VNF satisfy the joint scale-out condition.

5. The method according to any one of claims 2 to 4, wherein the KPI comprises a resource KPI and/or a service KPI, the resource KPI is used to indicate a resource usage of a corresponding VNF, and the service KPI is used to indicate a percentage of a quantity of users currently accessing the corresponding VNF in a maximum quantity of users that the corresponding VNF can tolerate.

6. The method according to any one of claims 3 to 5, wherein the determining (110), by the MANO depending on a change in the first VNF, that the delay of the response to the request of the user accessing the first VNF is in strong positive correlation with the KPI of the first VNF comprises:
determining, by the MANO depending on a change in a resource KPI of the first VNF, that the delay of the response to the request of the user accessing the first VNF is in strong positive correlation with the resource KPI of the first VNF; or
determining, by the MANO depending on a change in a service KPI of the first VNF, that the delay of the response to the request of the user accessing the first VNF is in strong positive correlation with the service KPI of the first VNF.

7. The method according to claim 5 or 6, wherein the resource KPI comprises at least one of the following information: a central processing unit, CPU, usage, a memory usage, a magnetic disk usage, and a network bandwidth usage.

8. The method according to any one of claims 2 to 7, wherein the method further comprises:
obtaining, by the MANO when determining that the delay of the response to the request of the user accessing the first VNF is in strong positive correlation with the KPI of the first VNF, a quantity of users accessing the first VNF and a quantity of service function chains SFCs passing through the second VNF;
determining, by the MANO based on the quantity of users, a resource satisfying the quantity of users; and
determining, by the MANO based on the quantity of SFCs, a resource satisfying the quantity of SFCs; and
the scaling out, by the MANO, the first VNF and the second VNF concurrently comprises:
scaling out, by the MANO, the first VNF and the second VNF concurrently based on the resource satisfying the quantity of users and the resource satisfying the quantity of SFCs.

9. The method according to claim 8, wherein the SFC is an SFC affected by an increase in a quantity of requests of the user accessing the first VNF.

10. The method according to claim 8 or 9, wherein the resource comprises at least one of the following information: a quantity of virtual machines, a quantity of chips, a memory size, a hard disk size, and a network interface card size.

11. A virtualized network function scale-out method, comprising:
receiving (315), by a second virtualized network function, VNF, scale-out notification information sent by a management and orchestration, MANO, wherein the scale-out notification information is used to indicate that a delay of a response to a request of a user accessing a first VNF exceeds a tolerance time of the user, and the second VNF is a downstream VNF of the first VNF;
after receiving the scale-out notification information, determining (320), by the second VNF, that the second VNF cannot satisfy a requirement of a user accessing the second VNF; and
sending (325), by the second VNF, a scale-out request to the MANO, wherein the scale-out request is used by the MANO to determine that the first VNF and the second VNF satisfy a joint scale-out condition and to scale out the first VNF and the second VNF, wherein a process of scaling out the first VNF and a process of scaling out the second VNF completely overlap or partially overlap, the joint scale-out condition indicates the first VNF and the second VNF satisfy scale-out condition.

12. The method according to claim 11, wherein the scale-out notification information is specifically used to indicate that the delay of the response to the request of the user accessing the first VNF is in strong positive correlation with a key performance indicator KPI of the first VNF, and the determining, by the second VNF, that the second VNF cannot satisfy a requirement of a user accessing the second VNF comprises:
determining, by the second VNF when a delay of a response to a request of the user accessing the second VNF is in weak positive correlation with a KPI of the second VNF, that the second VNF cannot satisfy the requirement of the user accessing the second VNF.

13. The method according to claim 12, wherein the KPI comprises a resource KPI and/or a service KPI, the resource KPI is used to indicate a resource usage of a corresponding VNF, and the service KPI is used to indicate a percentage of a quantity of users currently accessing the corresponding VNF in a maximum quantity of users that the corresponding VNF can tolerate.

14. The method according to claim 13, wherein the method further comprises:
obtaining, by the second VNF, a resource KPI or a service KPI of the second VNF for a plurality of times; and
determining, by the second VNF depending on a change in the resource KPI of the second VNF, that the delay of the response to the request of the user accessing the second VNF is in weak positive correlation with the resource KPI of the second VNF; or
determining, by the second VNF depending on a change in the service KPI of the second VNF, that the delay of the response to the request of the user accessing the second VNF is in weak positive correlation with the service KPI of the second VNF.

15. The method according to claim 13 or 14, wherein the resource KPI comprises at least one of the following information: a central processing unit, CPU, usage, a memory usage, a magnetic disk usage, and a network bandwidth usage.

16. A virtualized network function scale-out apparatus, comprising:
a first determining unit (410), configured to: when a delay of a response to a request of a user accessing a first virtualized network function, VNF, exceeds a tolerance time of the user and a second VNF cannot satisfy a requirement of a user accessing the second VNF, determine that the first VNF and the second VNF satisfy a joint scale-out condition, wherein the second VNF is a downstream VNF of the first VNF, the joint scale-out condition indicates the first VNF and the second VNF satisfy scale-out condition; and
a scale-out unit (420), configured to scale out the first VNF and the second VNF ,wherein a process of scaling out the first VNF and a process of scaling out the second VNF completely overlap or partially overlap.

17. The apparatus according to claim 16, wherein the first determining unit (410) is specifically configured to:
when the delay of the response to the request of the user accessing the first VNF is in strong positive correlation with a key performance indicator, KPI, of the first VNF and a delay of a response to a request of the user accessing the second VNF is in weak positive correlation with a KPI of the second VNF, determine that the first VNF and the second VNF satisfy the joint scale-out condition.

18. The apparatus according to claim 17, wherein the apparatus further comprises:
a first obtaining unit (430), configured to obtain the KPI of the first VNF and the KPI of the second VNF for a plurality of times; and
a second determining unit (440), configured to determine, depending on a change in the KPI of the first VNF and a change in the KPI of the second VNF, that the delay of the response to the request of the user accessing the first VNF is in strong positive correlation with the KPI of the first VNF and the delay of the response to the request of the user accessing the second VNF is in weak positive correlation with the KPI of the second VNF.

19. The apparatus according to claim 17, wherein the apparatus further comprises:
a first obtaining unit (430), configured to obtain the KPI of the first VNF for a plurality of times;
a second determining unit (440), configured to determine, depending on a change in the first VNF, that the delay of the response to the request of the user accessing the first VNF is in strong positive correlation with the KPI of the first VNF;
a sending unit (450), configured to send scale-out notification information to the second VNF, wherein the scale-out notification information is used to notify the second VNF that the delay of the response to the request of the user accessing the first VNF is in strong positive correlation with the KPI of the first VNF; and
a receiving unit (460), configured to receive a scale-out request sent by the second VNF based on the scale-out notification information, wherein the scale-out request is used to indicate that the delay of the response to the request of the user accessing the second VNF is in weak positive correlation with the KPI of the second VNF, wherein the first determining unit (410) is specifically configured to:
determine, based on the scale-out request, that the first VNF and the second VNF satisfy the joint scale-out condition.

20. The apparatus according to any one of claims 17 to 19, wherein the KPI comprises a resource KPI and/or a service KPI, the resource KPI is used to indicate a resource usage of a corresponding VNF, and the service KPI is used to indicate a percentage of a quantity of users currently accessing the corresponding VNF in a maximum quantity of users that the corresponding VNF can tolerate.

21. The apparatus according to any one of claims 18 to 20, wherein the second determining unit (440) is specifically configured to:
determine, depending on a change in a resource KPI of the first VNF, that the delay of the response to the request of the user accessing the first VNF is in strong positive correlation with the resource KPI of the first VNF; or
determine, depending on a change in a service KPI of the first VNF, that the delay of the response to the request of the user accessing the first VNF is in strong positive correlation with the service KPI of the first VNF.

22. The apparatus according to claim 20 or 21, wherein the resource KPI comprises at least one of the following information: a central processing unit, CPU, usage, a memory usage, a magnetic disk usage, and a network bandwidth usage.

23. The apparatus according to any one of claims 17 to 22, wherein the apparatus further comprises:
a second obtaining unit (470), configured to: when it is determined that the delay of the response to the request of the user accessing the first VNF is in strong positive correlation with the KPI of the first VNF, obtain a quantity of users accessing the first VNF and a quantity of service function chains SFCs passing through the second VNF; and
a third determining unit (480), configured to: determine, based on the quantity of users, a resource satisfying the quantity of users; and determine, based on the quantity of SFCs, a resource satisfying the quantity of SFCs; and
the scale-out unit (420) is specifically configured to:
scale out the first VNF and the second VNF concurrently based on the resource satisfying the quantity of users and the resource satisfying the quantity of SFCs.

24. The apparatus according to claim 23, wherein the SFC is an SFC affected by an increase in a quantity of requests of the user accessing the first VNF.

25. The apparatus according to claim 23 or 24, wherein the resource comprises at least one of the following information: a quantity of virtual machines, a quantity of chips, a memory size, a hard disk size, and a network interface card size.

26. A virtualized network function scale-out apparatus, comprising:
a receiving unit (510), configured to receive scale-out notification information sent by a management and orchestration, MANO, wherein the scale-out notification information is used to indicate that a delay of a response to a request of a user accessing a first VNF exceeds a tolerance time of the user, and a second VNF is a downstream VNF of the first VNF;
a first determining unit (520), configured to: after the scale-out notification information is received, determine that the second VNF cannot satisfy a requirement of a user accessing the second VNF; and
a sending unit (530), configured to send a scale-out request to the MANO, wherein the scale-out request is used by the MANO to determine that the first VNF and the second VNF satisfy a joint scale-out condition and to scale out the first VNF and the second VNF, wherein a process of scaling out the first VNF and a process of scaling out the second VNF completely overlap or partially overlap, the joint scale-out condition indicates the first VNF and the second VNF satisfy scale-out condition.

27. The apparatus according to claim 26, wherein the scale-out notification information is specifically used to indicate that the delay of the response to the request of the user accessing the first VNF is in strong positive correlation with a key performance indicator, KPI, of the first VNF, and the first determining unit is specifically configured to:
when a delay of a response to a request of the user accessing the second VNF is in weak positive correlation with a KPI of the second VNF, determine that the second VNF cannot satisfy the requirement of the user accessing the second VNF.

28. The apparatus according to claim 27, wherein the KPI comprises a resource KPI and/or a service KPI, the resource KPI is used to indicate a resource usage of a corresponding VNF, and the service KPI is used to indicate a percentage of a quantity of users currently accessing the corresponding VNF in a maximum quantity of users that the corresponding VNF can tolerate.

29. The apparatus according to claim 28, wherein the apparatus further comprises:
an obtaining unit (540), configured to obtain a resource KPI or a service KPI of the second VNF for a plurality of times; and
a second determining unit (550), configured to: determine, depending on a change in the resource KPI of the second VNF, that the delay of the response to the request of the user accessing the second VNF is in weak positive correlation with the resource KPI of the second VNF; or
determine, depending on a change in the service KPI of the second VNF, that the delay of the response to the request of the user accessing the second VNF is in weak positive correlation with the service KPI of the second VNF.

30. The apparatus according to claim 28 or 29, wherein the resource KPI comprises at least one of the following information: a central processing unit, CPU, usage, a memory usage, a magnetic disk usage, and a network bandwidth usage.

## Patentansprüche

1. Scale-Out-Verfahren für virtualisierte Netzwerkfunktionen, Folgendes umfassend:
Bestimmen (110) durch Management und Orchestrierung, MANO, wenn eine Verzögerung einer Antwort auf eine Anforderung eines auf eine erste virtualisierte Netzwerkfunktion, VNF, zugreifenden Benutzers eine Toleranzzeit des Benutzers überschreitet und eine zweite VNF ein Erfordernis eines auf die zweite VNF zugreifenden Benutzers nicht erfüllen kann, dass die erste VNF und die zweite VNF eine gemeinsame Scale-Out-Bedingung erfüllen, wobei es sich bei der zweiten VNF um eine der ersten VNF nachgeschaltete VNF handelt, wobei die gemeinsame Scale-Out-Bedingung angibt, dass die erste VNF und die zweite VNF die Scale-Out-Bedingung erfüllen; und
Durchführen eines Scale-Outs (120) der ersten VNF und der zweiten VNF durch MANO, wobei ein Prozess des Durchführen des Scale-Outs der ersten VNF und ein Prozess des Durchführens des Scale-Outs der zweiten VNF sich vollständig überlappen oder teilweise überlappen.

2. Verfahren nach Anspruch 1, wobei das Bestimmen (110) durch Management und Orchestrierung, MANO, wenn eine Verzögerung einer Antwort auf eine Anforderung eines auf eine erste virtualisierte Netzwerkfunktion, VNF, zugreifenden Benutzers eine Toleranzzeit des Benutzers überschreitet und eine zweite VNF ein Erfordernis eines auf die zweite VNF zugreifenden Benutzers nicht erfüllen kann, dass die erste VNF und die zweite VNF eine gemeinsame Scale-Out-Bedingung erfüllen, Folgendes umfasst:
Bestimmen durch MANO, wenn die Verzögerung der Antwort auf die Anforderung des auf die erste VNF zugreifenden Benutzers eine stark positive Korrelation mit einer Leistungskennzahl KPI der ersten VNF aufweist und eine Verzögerung einer Antwort auf eine Anforderung des auf die zweite VNF zugreifenden Benutzers eine schwach positive Korrelation mit einer KPI der zweiten VNF aufweist, dass die erste VNF und die zweite VNF die gemeinsame Scale-Out-Bedingung erfüllen.

3. Verfahren nach Anspruch 2, wobei das Verfahren ferner Folgendes umfasst:
Erfassen durch MANO der KPI der ersten VNF und der KPI der zweiten VNF für mehrere Zeitpunkte; und
Bestimmen durch MANO in Abhängigkeit von einer Änderung der KPI der ersten VNF und einer Änderung der KPI der zweiten VNF, dass die Verzögerung der Antwort auf die Anforderung des auf die erste VNF zugreifenden Benutzers eine stark positive Korrelation mit der KPI der ersten VNF aufweist und die Verzögerung der Antwort auf die Anforderung des auf die zweite VNF zugreifenden Benutzers eine schwach positive Korrelation mit der KPI der zweiten VNF aufweist.

4. Verfahren nach Anspruch 2, wobei das Bestimmen (110) durch MANO, wenn die Verzögerung der Antwort auf die Anforderung des auf die erste VNF zugreifenden Benutzers eine stark positive Korrelation mit einer Leistungskennzahl KPI der ersten VNF aufweist und eine Verzögerung einer Antwort auf eine Anforderung des auf die zweite VNF zugreifenden Benutzers eine schwach positive Korrelation mit einer KPI der zweiten VNF aufweist, dass die erste VNF und die zweite VNF die gemeinsame Scale-Out-Bedingung erfüllen, Folgendes umfasst:
Erfassen durch MANO der KPI der ersten VNF für mehrere Zeitpunkte;
Bestimmen durch MANO in Abhängigkeit von einer Änderung der KPI der ersten VNF, dass die Verzögerung der Antwort auf die Anforderung des auf die erste VNF zugreifenden Benutzers eine stark positive Korrelation mit der KPI der ersten VNF aufweist;
Senden durch MANO von Scale-Out-Benachrichtigungsinformationen an die zweite VNF, wobei die Scale-Out-Benachrichtigungsinformationen verwendet werden, um die zweite VNF darüber zu benachrichtigen, dass die Verzögerung der Antwort auf die Anforderung des auf die erste VNF zugreifenden Benutzers eine stark positive Korrelation mit der KPI der ersten VNF aufweist;
Empfangen durch MANO einer von der zweiten VNF basierend auf den Scale-Out-Benachrichtigungsinformationen gesendeten Scale-Out-Anforderung, wobei die Scale-Out-Anforderung zum Angeben, dass die Verzögerung der Antwort auf die Anforderung des auf die zweite VNF zugreifenden Benutzers eine schwach positive Korrelation mit der KPI der zweiten VNF aufweist, verwendet wird; und
Bestimmen durch MANO basierend auf der Scale-Out-Anforderung, dass die erste VNF und die zweite VNF die gemeinsame Scale-Out-Bedingung erfüllen.

5. Verfahren nach einem der Ansprüche 2 bis 4, wobei die KPI eine Ressourcen-KPI und/oder eine Dienst-KPI umfasst, die Ressourcen-KPI zum Angeben einer Ressourcennutzung einer entsprechenden VNF verwendet wird und die Dienst-KPI zum Angeben eines Prozentsatzes einer gegenwärtig auf die entsprechende VNF zugreifenden Benutzeranzahl aus einer maximalen Benutzeranzahl, die die entsprechende VNG tolerieren kann, verwendet wird.

6. Verfahren nach einem der Ansprüche 3 bis 5, wobei das Bestimmen (110) durch MANO in Abhängigkeit von einer Änderung der KPI der ersten VNF, dass die Verzögerung der Antwort auf die Anforderung des auf die erste VNF zugreifenden Benutzers eine stark positive Korrelation mit der KPI der ersten VNF aufweist, Folgendes umfasst:
Bestimmen durch MANO in Abhängigkeit von einer Änderung einer Ressourcen-KPI der ersten VNF, dass die Verzögerung der Antwort auf die Anforderung des auf die erste VNF zugreifenden Benutzers eine stark positive Korrelation mit der Ressourcen-KPI der ersten VNF aufweist; oder
Bestimmen durch MANO in Abhängigkeit von einer Änderung einer Dienst-KPI der ersten VNF, dass die Verzögerung der Antwort auf die Anforderung des auf die erste VNF zugreifenden Benutzers eine stark positive Korrelation mit der Dienst-KPI der ersten VNF aufweist.

7. Verfahren nach Anspruch 5 oder 6, wobei die Ressourcen-KPI mindestens eine der folgenden Informationen umfasst:
eine Nutzung der zentralen Verarbeitungseinheit, CPU, eine Speichernutzung, eine Magnetplattennutzung und eine Netzwerkbandbreitennutzung.

8. Verfahren nach einem der Ansprüche 2 bis 7, wobei das Verfahren ferner Folgendes umfasst:
Erfassen durch MANO einer Anzahl von auf die erste VNF zugreifenden Benutzern und einer Anzahl von die zweite VNF passierender Dienstfunktionsketten SFC, wenn bestimmt wird, dass die Verzögerung der Antwort auf die Anforderung des auf die erste VNF zugreifenden Benutzers eine stark positive Korrelation mit der KPI der ersten VNF aufweist;
Bestimmen durch MANO basierend auf der Anzahl von Benutzern, einer Ressource, die die Anzahl von Benutzern erfüllt; und
Bestimmen durch MANO basierend auf der Anzahl von SFC, einer Ressource, die die Anzahl von SFCs erfüllt; und
das gleichzeitige Durchführen des Scale-Outs der ersten VNF und der zweiten VNF durch MANO Folgendes umfasst:
gleichzeitiges Durchführen des Scale-Outs der ersten VNF und der zweiten VNF durch MANO basierend auf der Ressource, die die Anzahl von Benutzern erfüllt, und der Ressource, die die Anzahl von SFCs erfüllt.

9. Verfahren nach Anspruch 8, wobei die SFC eine SFC ist, auf die eine Zunahme einer Anzahl von Anforderungen des auf die erste VNF zugreifenden Benutzers Auswirkungen hat.

10. Verfahren nach Anspruch 8 oder 9, wobei die Ressource mindestens eine der folgenden Informationen umfasst:
eine Anzahl virtueller Maschinen, eine Anzahl von Chips, eine Speichergröße, eine Festplattengröße und eine Netzwerkschnittstellenkartengröße.

11. Scale-Out-Verfahren für virtualisierte Netzwerkfunktionen, Folgendes umfassend:
Empfangen (315) von durch Management und Orchestrierung, MANO, gesendeten Scale-Out-Benachrichtigungsinformationen durch eine zweite virtualisierte Netzwerkfunktion, VNF, wobei die Scale-Out-Benachrichtigungsinformationen zum Anzeigen, dass eine Verzögerung einer Antwort auf eine Anforderung eines auf eine erste VNF zugreifenden Benutzers eine Toleranzzeit des Benutzers überschreitet, verwendet werden und es sich bei der zweiten VNF um eine der ersten VNF nachgeschaltete VNF handelt;
nach dem Empfangen der Scale-Out-Benachrichtigungsinformationen, Bestimmen (320) durch die zweite VNF, dass die zweite VNF ein Erfordernis eines auf die zweite VNF zugreifenden Benutzers nicht erfüllen kann; und
Senden (325) einer Scale-Out-Anforderung durch die zweite VNF an MANO, wobei die Scale-Out-Anforderung von MANO verwendet wird, um zu bestimmen, dass die erste VNF und die zweite VNF eine gemeinsame Scale-Out-Bedingung erfüllen, und um ein Scale-Out der ersten VNF und der zweiten VNF durchzuführen, wobei sich ein Prozess des Durchführens eines Scale-Outs der ersten VNF und ein Prozess des Durchführens eines Scale-Outs der zweiten VNF vollständig überlappen oder sich teilweise überlappen, die gemeinsame Scale-Out-Bedingung angibt, dass die erste VNF und die zweite VNF die Scale-Out-Bedingung erfüllen.

12. Verfahren nach Anspruch 11, wobei die Scale-Out-Benachrichtigungsinformationen spezifisch zum Anzeigen, dass die Verzögerung der Antwort auf die Anforderung des auf die erste VNF zugreifenden Benutzers eine stark positive Korrelation mit einer Leistungskennzahl KPI der ersten VNF aufweist, verwendet werden und das Bestimmen durch die zweite VNF, dass die zweite VNF ein Erfordernis eines auf die zweite VNF zugreifenden Benutzers nicht erfüllen kann, Folgendes umfasst:
Bestimmen durch die zweite VNF, wenn eine Verzögerung einer Antwort auf eine Anforderung des auf die zweite VNF zugreifenden Benutzers eine schwach positive Korrelation mit einer KPI der zweiten VNF aufweist, dass die zweite VNF das Erfordernis des auf die zweite VNF zugreifenden Benutzers nicht erfüllen kann.

13. Verfahren nach Anspruch 12, wobei die KPI eine Ressourcen-KPI und/oder eine Dienst-KPI umfasst, die Ressourcen-KPI zum Angeben einer Ressourcennutzung einer entsprechenden VNF verwendet wird und die Dienst-KPI zum Angeben eines Prozentsatzes einer gegenwärtig auf die entsprechende VNF zugreifenden Benutzeranzahl aus einer maximalen Benutzeranzahl, die die entsprechende VNG tolerieren kann, verwendet wird.

14. Verfahren nach Anspruch 13, wobei das Verfahren ferner Folgendes umfasst:
Erfassen durch die zweite VNF einer Ressourcen-KPI oder einer Dienst-KPI der zweiten VNF für mehrere Zeitpunkte; und
Bestimmen durch die zweite VNF in Abhängigkeit von einer Änderung der Ressourcen-KPI der zweiten VNF, dass die Verzögerung der Antwort auf die Anforderung des auf die zweite VNF zugreifenden Benutzers eine schwach positive Korrelation mit der Ressourcen-KPI der zweiten VNF aufweist; oder
Bestimmen durch die zweite VNF in Abhängigkeit von einer Änderung der Dienst-KPI der zweiten VNF, dass die Verzögerung der Antwort auf die Anforderung des auf die zweite VNF zugreifenden Benutzers eine schwach positive Korrelation mit der Dienst-KPI der zweiten VNF aufweist.

15. Verfahren nach Anspruch 13 oder 14, wobei die Ressourcen-KPI mindestens eine der folgenden Informationen umfasst:
eine Nutzung der zentralen Verarbeitungseinheit, CPU, eine Speichernutzung, eine Magnetplattennutzung und eine Netzwerkbandbreitennutzung.

16. Scale-Out-Einrichtung für virtualisierte Netzwerkfunktionen, Folgendes umfassend:
eine erste Bestimmungseinheit (410), die dazu eingerichtet ist:
wenn eine Verzögerung einer Antwort auf eine Anforderung eines auf eine erste virtualisierte Netzwerkfunktion, VNF, zugreifenden Benutzers eine Toleranzzeit des Benutzers überschreitet und eine zweite VNF ein Erfordernis eines auf die zweite VNF zugreifenden Benutzers nicht erfüllen kann, zu bestimmen, dass die erste VNF und die zweite VNF eine gemeinsame Scale-Out-Bedingung erfüllen, wobei es sich bei der zweiten VNF um eine der ersten VNF nachgeschaltete VNF handelt, wobei die gemeinsame Scale-Out-Bedingung angibt, dass die erste VNF und die zweite VNF die Scale-Out-Bedingung erfüllen; und
eine Scale-Out-Einheit (420), die dazu eingerichtet ist, das Scale-Out der ersten VNF und der zweiten VNF durchzuführen, wobei ein Prozess des Durchführens des Scale-Outs der ersten VNF und ein Prozess des Durchführens des Scale-Outs der zweiten VNF sich vollständig überlappen oder teilweise überlappen.

17. Einrichtung nach Anspruch 16, wobei die Bestimmungseinheit (410) spezifisch dazu eingerichtet ist:
wenn die Verzögerung der Antwort auf die Anforderung des auf die erste VNF zugreifenden Benutzers eine stark positive Korrelation mit einer Leistungskennzahl, KPI, der ersten VNF aufweist und eine Verzögerung einer Antwort auf eine Anforderung des auf die zweite VNF zugreifenden Benutzers eine schwach positive Korrelation mit einer KPI der zweiten VNF aufweist, zu bestimmen, dass die erste VNF und die zweite VNF die gemeinsame Scale-Out-Bedingung erfüllen.

18. Einrichtung nach Anspruch 17, wobei die Einrichtung ferner Folgendes umfasst:
eine erste Erfassungseinheit (430), die dazu eingerichtet ist, die KPI der ersten VNF und den KPI der zweiten VNF für mehrere Zeitpunkte zu erfassen; und
eine zweite Bestimmungseinheit (440), die dazu eingerichtet ist, in Abhängigkeit von einer Änderung der KPI der ersten VNF und einer Änderung der KPI der zweiten VNF zu bestimmen, dass die Verzögerung der Antwort auf die Anforderung des auf die erste VNF zugreifenden Benutzers eine stark positive Korrelation mit der KPI der ersten VNF aufweist und die Verzögerung der Antwort auf die Anforderung des auf die zweite VNF zugreifenden Benutzers eine schwach positive Korrelation mit der KPI der zweiten VNF aufweist.

19. Einrichtung nach Anspruch 17, wobei die Einrichtung ferner Folgendes umfasst:
eine erste Erfassungseinheit (430), die dazu eingerichtet ist, die KPI der ersten VNF für mehrere Zeitpunkte zu erfassen;
eine zweite Bestimmungseinheit (440), die dazu eingerichtet ist, in Abhängigkeit von einer Änderung der KPI der ersten VNF zu bestimmen, dass die Verzögerung der Antwort auf die Anforderung des auf die erste VNF zugreifenden Benutzers eine stark positive Korrelation mit der KPI der ersten VNF aufweist;
eine Sendeeinheit (450), die dazu eingerichtet ist, Scale-Out-Benachrichtigungsinformationen an die zweite VNF zu senden, wobei die Scale-Out-Benachrichtigungsinformationen verwendet werden, um die zweite VNF darüber zu benachrichtigen, dass die Verzögerung der Antwort auf die Anforderung des auf die erste VNF zugreifenden Benutzers eine stark positive Korrelation mit der KPI der ersten VNF aufweist; und
eine Empfangseinheit (460), die dazu eingerichtet ist, eine von der zweiten VNF basierend auf den Scale-Out-Benachrichtigungsinformationen gesendete Scale-Out-Anforderung zu empfangen, wobei die Scale-Out-Anforderung zum Angeben, dass die Verzögerung der Antwort auf die Anforderung des auf die zweite VNF zugreifenden Benutzers eine schwach positive Korrelation mit der KPI der zweiten VNF aufweist, verwendet wird; wobei die erste Bestimmungseinheit (410) spezifisch dazu eingerichtet ist:
basierend auf der Scale-Out-Anforderung zu bestimmen, dass die erste VNF und die zweite VNF die gemeinsame Scale-Out-Bedingung erfüllen.

20. Einrichtung nach einem der Ansprüche 17 bis 19, wobei die KPI eine Ressourcen-KPI und/oder eine Dienst-KPI umfasst, die Ressourcen-KPI zum Angeben einer Ressourcennutzung einer entsprechenden VNF verwendet wird und die Dienst-KPI zum Angeben eines Prozentsatzes einer gegenwärtig auf die entsprechende VNF zugreifenden Benutzeranzahl aus einer maximalen Benutzeranzahl, die die entsprechende VNG tolerieren kann, verwendet wird.

21. Einrichtung nach einem der Ansprüche 18 bis 20, wobei die zweite Bestimmungseinheit (440) spezifisch dazu eingerichtet ist:
in Abhängigkeit von einer Änderung einer Ressourcen-KPI der ersten VNF zu bestimmen, dass die Verzögerung der Antwort auf die Anforderung des auf die erste VNF zugreifenden Benutzers eine stark positive Korrelation mit der Ressourcen-KPI der ersten VNF aufweist; oder
in Abhängigkeit von einer Änderung einer Dienst-KPI der ersten VNF zu bestimmen, dass die Verzögerung der Antwort auf die Anforderung des auf die erste VNF zugreifenden Benutzers eine stark positive Korrelation mit der Dienst-KPI der ersten VNF aufweist.

22. Einrichtung nach Anspruch 20 oder 21, wobei die Ressourcen-KPI mindestens eine der folgenden Informationen umfasst:
eine Nutzung der zentralen Verarbeitungseinheit, CPU, eine Speichernutzung, eine Magnetplattennutzung und eine Netzwerkbandbreitennutzung.

23. Einrichtung nach einem der Ansprüche 17 bis 22, wobei die Einrichtung ferner Folgendes umfasst:
eine zweite Erfassungseinheit (470), die dazu eingerichtet ist:
eine Anzahl von auf die erste VNF zugreifenden Benutzern und eine Anzahl von die zweite VNF passierender Dienstfunktionsketten SFC zu erhalten, wenn bestimmt wird, dass die Verzögerung der Antwort auf die Anforderung des auf die erste VNF zugreifenden Benutzers eine stark positive Korrelation mit der KPI der ersten VNF aufweist; und
eine dritte Bestimmungseinheit (480), die dazu eingerichtet ist:
basierend auf der Anzahl von Benutzern, eine Ressource zu bestimmen, die die Anzahl von Benutzern erfüllt; und
basierend auf der Anzahl von SFC, eine Ressource zu bestimmen, die die Anzahl von SFCs erfüllt; und
wobei die Scale-Out-Einheit (420) spezifisch dazu eingerichtet ist:
das Scale-Out der ersten VNF und der zweiten VNF basierend auf der Ressource, die die Anzahl von Benutzern erfüllt, und der Ressource, die die Anzahl von SFCs erfüllt, gleichzeitig durchzuführen.

24. Einrichtung nach Anspruch 23, wobei die SFC eine SFC ist, auf die eine Zunahme einer Anzahl von Anforderungen des auf die erste VNF zugreifenden Benutzers Auswirkungen hat.

25. Einrichtung nach Anspruch 23 oder 24, wobei die Ressource mindestens eine der folgenden Informationen umfasst:
eine Anzahl virtueller Maschinen, eine Anzahl von Chips, eine Speichergröße, eine Festplattengröße und eine Netzwerkschnittstellenkartengröße.

26. Scale-Out-Einrichtung für virtualisierte Netzwerkfunktionen, Folgendes umfassend:
eine Empfangseinheit (510), die dazu eingerichtet ist, von durch Management und Orchestrierung, MANO, gesendete Scale-Out-Benachrichtigungsinformationen zu empfangen, wobei die Scale-Out-Benachrichtigungsinformationen zum Anzeigen, dass eine Verzögerung einer Antwort auf eine Anforderung eines auf eine erste VNF zugreifenden Benutzers eine Toleranzzeit des Benutzers überschreitet, verwendet werden und es sich bei einer zweiten VNF um eine der ersten VNF nachgeschaltete VNF handelt;
eine erste Bestimmungseinheit (520), die dazu eingerichtet ist:
nachdem die Scale-Out-Benachrichtigungsinformationen empfangen wurden, zu bestimmen, dass die zweite VNF ein Erfordernis eines auf die zweite VNF zugreifenden Benutzers nicht erfüllen kann; und
eine Sendeeinheit (530), die dazu eingerichtet ist, eine Scale-Out-Anforderung an MANO zu senden, wobei die Scale-Out-Anforderung von MANO verwendet wird, um zu bestimmen, dass die erste VNF und die zweite VNF eine gemeinsame Scale-Out-Bedingung erfüllen, und um ein Scale-Out der ersten VNF und der zweiten VNF durchzuführen, wobei sich ein Prozess des Durchführens eines Scale-Outs der ersten VNF und ein Prozess des Durchführens eines Scale-Outs der zweiten VNF vollständig überlappen oder sich teilweise überlappen, die gemeinsame Scale-Out-Bedingung angibt, dass die erste VNF und die zweite VNF die Scale-Out-Bedingung erfüllen.

27. Einrichtung nach Anspruch 26, wobei die Scale-Out-Benachrichtigungsinformationen spezifisch zum Anzeigen, dass die Verzögerung der Antwort auf die Anforderung des auf die erste VNF zugreifenden Benutzers eine stark positive Korrelation mit einer Leistungskennzahl, KPI, der ersten VNF aufweist, verwendet werden und die erste Bestimmungseinheit spezifisch dazu eingerichtet ist:
wenn eine Verzögerung einer Antwort auf eine Anforderung des auf die zweite VNF zugreifenden Benutzers eine schwach positive Korrelation mit einer KPI der zweiten VNF aufweist, zu bestimmen, dass die zweite VNF das Erfordernis des auf die zweite VNF zugreifenden Benutzers nicht erfüllen kann.

28. Einrichtung nach Anspruch 27, wobei die KPI eine Ressourcen-KPI und/oder eine Dienst-KPI umfasst, die Ressourcen-KPI zum Angeben einer Ressourcennutzung einer entsprechenden VNF verwendet wird und die Dienst-KPI zum Angeben eines Prozentsatzes einer gegenwärtig auf die entsprechende VNF zugreifenden Benutzeranzahl aus einer maximalen Benutzeranzahl, die die entsprechende VNG tolerieren kann, verwendet wird.

29. Einrichtung nach Anspruch 28, wobei die Einrichtung ferner Folgendes umfasst:
eine Erfassungseinheit (540), die dazu eingerichtet ist, eine Ressourcen-KPI oder eine Dienst-KPI der zweiten VNF für mehrere Zeitpunkte zu erfassen; und
eine zweite Bestimmungseinheit (550), die dazu eingerichtet ist:
in Abhängigkeit von einer Änderung der Ressourcen-KPI der zweiten VNF zu bestimmen, dass die Verzögerung der Antwort auf die Anforderung des auf die zweite VNF zugreifenden Benutzers eine schwach positive Korrelation mit der Ressourcen-KPI der zweiten VNF aufweist; oder
in Abhängigkeit von einer Änderung der Dienst-KPI der zweiten VNF zu bestimmen, dass die Verzögerung der Antwort auf die Anforderung des auf die zweite VNF zugreifenden Benutzers eine schwach positive Korrelation mit der Dienst-KPI der zweiten VNF aufweist.

30. Einrichtung nach Anspruch 28 oder 29, wobei die Ressourcen-KPI mindestens eine der folgenden Informationen umfasst:
eine Nutzung der zentralen Verarbeitungseinheit, CPU, eine Speichernutzung, eine Magnetplattennutzung und eine Netzwerkbandbreitennutzung.

## Revendications

1. Procédé de mise à l'échelle de fonction de réseau virtualisée, comprenant :
la détermination (110), par une gestion et une orchestration, MANO, lorsqu'un retard d'une réponse à une demande d'un utilisateur accédant à une première fonction réseau virtualisée, VNF, est supérieur à un délai de tolérance de l'utilisateur et qu'une seconde VNF ne peut pas satisfaire une exigence d'un utilisateur accédant à la seconde VNF, du fait que la première VNF et la seconde VNF satisfont une condition de mise à l'échelle commune, dans lequel la seconde VNF est une VNF en aval de la première VNF, la condition de mise à l'échelle commune indique que la première VNF et la seconde VNF satisfont la condition de mise à l'échelle ; et
la mise à l'échelle (120), par les MANO, de la première VNF et de la seconde VNF, dans lequel un processus de mise à l'échelle de la première VNF et un processus de mise à l'échelle de la seconde VNF se chevauchent complètement ou se chevauchent partiellement.

2. Procédé selon la revendication 1, dans lequel la détermination (110), par une gestion et une orchestration, MANO, lorsqu'un retard d'une réponse à une demande d'un utilisateur accédant à une première fonction réseau virtualisée, VNF, est supérieur à un délai de tolérance de l'utilisateur et qu'une seconde VNF ne peut pas satisfaire une exigence d'un utilisateur accédant à la seconde VNF, du fait que la première VNF et la seconde VNF satisfont une condition de mise à l'échelle commune comprend :
la détermination, par les MANO, lorsque le retard de la réponse à la demande de l'utilisateur accédant à la première VNF est en forte corrélation positive avec un indicateur clé de performance, KPI, de la première VNF et qu'un retard d'une réponse à une demande de l'utilisateur accédant à la seconde VNF est en faible corrélation positive avec un KPI de la seconde VNF, du fait que la première VNF et la seconde VNF satisfont la condition de mise à l'échelle commune.

3. Procédé selon la revendication 2, dans lequel ledit procédé comprenant en outre :
l'obtention, par les MANO, du KPI de la première VNF et du KPI de la seconde VNF pour une pluralité de temps ; et
la détermination, par les MANO, en fonction d'une modification du KPI de la première VNF et d'une modification du KPI de la seconde VNF, du fait que le retard de la réponse à la demande de l'utilisateur accédant à la première VNF est en forte corrélation positive avec le KPI de la première VNF et que le retard de la réponse à la demande de l'utilisateur accédant à la seconde VNF est en faible corrélation positive avec le KPI de la seconde VNF.

4. Procédé selon la revendication 2, dans lequel la détermination (110), par les MANO, lorsque le retard de la réponse à la demande de l'utilisateur accédant à la première VNF est en forte corrélation positive avec un indicateur clé de performance, KPI, de la première VNF et qu'un retard d'une réponse à une demande de l'utilisateur accédant à la seconde VNF est en faible corrélation positive avec un KPI de la seconde VNF, du fait que la première VNF et la seconde VNF satisfont la condition de mise à l'échelle commune comprend :
l'obtention, par le MANO, du KPI de la première VNF pour une pluralité de temps ;
la détermination, par les MANO, en fonction d'une modification du KPI de la première VNF, du fait que le retard de la réponse à la demande de l'utilisateur accédant à la première VNF est en forte corrélation positive avec le KPI de la première VNF ;
l'envoi, par les MANO, des informations de notification de mise à l'échelle à la seconde VNF, dans lequel les informations de notification de mise à l'échelle sont utilisées pour notifier à la seconde VNF que le retard de la réponse à la demande de l'utilisateur accédant à la première VNF est en forte corrélation positive avec le KPI de la première VNF;
la réception, par les MANO, d'une demande de mise à l'échelle envoyée par la seconde VNF sur la base des informations de notification de mise à l'échelle, dans lequel la demande de mise à l'échelle est utilisée pour indiquer que le retard de la réponse à la demande de l'utilisateur accédant à la seconde VNF est en faible corrélation positive avec le KPI de la seconde VNF ; et
la détermination, par les MANO, sur la base de la demande de mise à l'échelle, du fait que la première VNF et la seconde VNF satisfont la condition de mise à l'échelle commune.

5. Procédé selon l'une quelconque des revendications 2 à 4, dans lequel le KPI comprend un KPI de ressource et/ou un KPI de service, le KPI de ressource est utilisé pour indiquer une utilisation de ressource d'une VNF correspondante, et le KPI de service est utilisé pour indiquer un pourcentage d'un nombre d'utilisateurs accédant actuellement à la VNF correspondante dans un nombre maximal d'utilisateurs que la VNF correspondante peut tolérer.

6. Procédé selon l'une quelconque des revendications 3 à 5, dans lequel la détermination (110), par les MANO, en fonction d'une modification de la première VNF, du fait que le retard de la réponse à la demande de l'utilisateur accédant à la première VNF est en forte corrélation positive avec le KPI de la première VNF comprend :
la détermination, par les MANO, en fonction d'une modification du KPI de ressource de la première VNF, du fait que le retard de la réponse à la demande de l'utilisateur accédant à la première VNF est en forte corrélation positive avec le KPI de ressource de la première VNF ; ou
la détermination, par les MANO, en fonction d'une modification du KPI de service de la première VNF, du fait que le retard de la réponse à la demande de l'utilisateur accédant à la première VNF est en forte corrélation positive avec le KPI de service de la première VNF.

7. Procédé selon la revendication 5 ou 6, dans lequel le KPI de ressource comprend les informations suivantes :
l'utilisation d'une unité centrale de traitement, UC, et/ou l'utilisation d'une mémoire et/ou l'utilisation d'un disque magnétique et/ou l'utilisation d'une bande passante de réseau.

8. Procédé selon l'une quelconque des revendications 2 à 7, dans lequel ledit procédé comprend en outre :
l'obtention, par les MANO, lors de la détermination du fait que le retard de la réponse à la demande de l'utilisateur accédant à la première VNF est en forte corrélation positive avec le KPI de la première VNF, d'un nombre d'utilisateurs accédant à la première VNF et d'un nombre de chaînes de fonction de service, SFC, traversant la seconde VNF ;
la détermination, par les MANO, sur la base du nombre d'utilisateurs, d'une ressource satisfaisant le nombre d'utilisateurs ; et
la détermination, par les MANO, sur la base du nombre de SFC, d'une ressource satisfaisant le nombre de SFC ; et
la mise à l'échelle, par les MANO, de la première VNF et de la seconde VNF comprenant simultanément :
la mise à l'échelle, par les MANO, de la première VNF et de la seconde VNF simultanément sur la base de la ressource satisfaisant le nombre d'utilisateurs et de la ressource satisfaisant le nombre de SFC.

9. Procédé selon la revendication 8, dans lequel la SFC est une SFC affectée par une augmentation d'un nombre de demandes de l'utilisateur accédant à la première VNF.

10. Procédé selon la revendication 8 ou 9, dans lequel la ressource comprend les informations suivantes :
un nombre de machines virtuelles et/ou un nombre de puces et/ou une taille de mémoire et/ou une taille de disque dur et/ou une taille de carte d'interface réseau.

11. Procédé de mise à l'échelle de fonction de réseau virtualisée, comprenant :
la réception (315), par une seconde fonction de réseau virtualisée, VNF, des informations de notification de mise à l'échelle envoyées par une gestion et une orchestration, MANO, dans lequel les informations de notification de mise à l'échelle sont utilisées pour indiquer qu'un retard d'une réponse à une demande d'un utilisateur accédant à une première VNF est supérieur à un délai de tolérance de l'utilisateur, et que la seconde VNF est une VNF en aval de la première VNF ;
la détermination (320), après avoir reçu les informations de notification de mise à l'échelle, par la seconde VNF, du fait que la seconde VNF ne peut pas satisfaire une exigence d'un utilisateur accédant à la seconde VNF ; et
l'envoi (325), par la seconde VNF, d'une demande de mise à l'échelle aux MANO, dans lequel la demande de mise à l'échelle est utilisée par les MANO pour déterminer que la première VNF et la seconde VNF satisfont une condition de mise à l'échelle commune et pour mettre à l'échelle la première VNF et la seconde VNF, dans lequel un processus de mise à l'échelle de la première VNF et un processus de mise à l'échelle de la seconde VNF se chevauchent complètement ou se chevauchent partiellement, la condition de mise à l'échelle commune indique que la première VNF et la seconde VNF satisfont la condition de mise à l'échelle.

12. Procédé selon la revendication 11, dans lequel les informations de notification de mise à l'échelle sont spécifiquement utilisées pour indiquer que le retard de la réponse à la demande de l'utilisateur accédant à la première VNF est en forte corrélation positive avec un indicateur clé de performance, KPI, de la première VNF, et la détermination, par la seconde VNF, du fait que la seconde VNF ne peut pas satisfaire une exigence d'un utilisateur accédant à la seconde VNF comprend :
la détermination, par la seconde VNF, lorsqu'un retard d'une réponse à une demande de l'utilisateur accédant à la seconde VNF est en faible corrélation positive avec un KPI de la seconde VNF, du fait que la seconde VNF ne peut pas satisfaire l'exigence de l'utilisateur accédant à la seconde VNF.

13. Procédé selon la revendication 12, dans lequel le KPI comprend un KPI de ressource et/ou un KPI de service, le KPI de ressource est utilisé pour indiquer une utilisation de ressource d'une VNF correspondante, et le KPI de service est utilisé pour indiquer un pourcentage d'un nombre d'utilisateurs accédant actuellement à la VNF correspondante dans un nombre maximal d'utilisateurs que la VNF correspondante peut tolérer.

14. Procédé selon la revendication 13, dans lequel ledit procédé comprend en outre :
l'obtention, par la seconde VNF, d'un KPI de ressource ou d'un KPI de service de la seconde VNF pour une pluralité de temps ; et
la détermination, par la seconde VNF, en fonction d'une modification du KPI de ressource de la seconde VNF, du fait que le retard de la réponse à la demande de l'utilisateur accédant à la seconde VNF est en faible corrélation positive avec le KPI de ressource de la seconde VNF ; ou
la détermination, par la seconde VNF, en fonction d'une modification du KPI de service de la seconde VNF, du fait que le retard de la réponse à la demande de l'utilisateur accédant à la seconde VNF est en faible corrélation positive avec le KPI de service de la seconde VNF.

15. Procédé selon la revendication 13 ou 14, dans lequel le KPI de ressource comprend les informations suivantes :
l'utilisation d'une unité centrale de traitement, UC, et/ou l'utilisation d'une mémoire et/ou l'utilisation d'un disque magnétique et/ou l'utilisation d'une bande passante de réseau.

16. Appareil de mise à l'échelle de fonction de réseau virtualisée, comprenant :
une première unité de détermination (410), configurée :
pour déterminer, lorsqu'un retard d'une réponse à une demande d'un utilisateur accédant à une première fonction réseau virtualisée, VNF, est supérieur à un délai de tolérance de l'utilisateur et qu'une seconde VNF ne peut pas satisfaire une exigence d'un utilisateur accédant à la seconde VNF, que la première VNF et la seconde VNF satisfont une condition de mise à l'échelle commune, dans lequel la seconde VNF est une VNF en aval de la première VNF, la condition de mise à l'échelle commune indique que la première VNF et la seconde VNF satisfont la condition de mise à l'échelle ; et
une unité de mise à l'échelle (420), configurée pour mettre à l'échelle la première VNF et la seconde VNF, dans lequel un processus de mise à l'échelle de la première VNF et un processus de mise à l'échelle de la seconde VNF se chevauchent complètement ou se chevauchent partiellement.

17. Appareil selon la revendication 16, dans lequel la première unité de détermination (410) est spécifiquement configurée :
pour déterminer, lorsque le retard de la réponse à la demande de l'utilisateur accédant à la première VNF est en forte corrélation positive avec un indicateur clé de performance, KPI, de la première VNF et qu'un retard d'une réponse à une demande de l'utilisateur accédant à la seconde VNF est en faible corrélation positive avec un KPI de la seconde VNF, que la première VNF et la seconde VNF satisfont la condition de mise à l'échelle commune.

18. Appareil selon la revendication 17, dans lequel ledit appareil comprend en outre :
une première unité d'obtention (430), configurée pour obtenir le KPI de la première VNF et le KPI de la seconde VNF pour une pluralité de temps ; et
une deuxième unité de détermination (440), configurée pour déterminer, en fonction d'une modification du KPI de la première VNF et d'une modification du KPI de la seconde VNF, que le retard de la réponse à la demande de l'utilisateur accédant à la première VNF est en forte corrélation positive avec le KPI de la première VNF et que le retard de la réponse à la demande de l'utilisateur accédant à la seconde VNF est en faible corrélation positive avec le KPI de la seconde VNF.

19. Appareil selon la revendication 17, dans lequel ledit appareil comprend en outre :
une première unité d'obtention (430), configurée pour obtenir le KPI de la première VNF pour une pluralité de temps ;
une deuxième unité de détermination (440), configurée pour déterminer, en fonction d'une modification de la première VNF, que le retard de la réponse à la demande de l'utilisateur accédant à la première VNF est en forte corrélation positive avec le KPI de la première VNF;
une unité d'envoi (450), configurée pour envoyer des informations de notification de mise à l'échelle à la seconde VNF, dans lequel les informations de notification de mise à l'échelle sont utilisées pour notifier à la seconde VNF que le retard de la réponse à la demande de l'utilisateur accédant à la première VNF est en forte corrélation positive avec le KPI de la première VNF ; et
une unité de réception (460), configurée pour recevoir une demande de mise à l'échelle envoyée par la seconde VNF sur la base des informations de notification de mise à l'échelle, dans lequel la demande de mise à l'échelle est utilisée pour indiquer que le retard de la réponse à la demande de l'utilisateur accédant à la seconde VNF est en faible corrélation positive avec le KPI de la seconde VNF, dans lequel la première unité de détermination (410) est spécifiquement configurée :
pour déterminer, sur la base de la demande de mise à l'échelle, que la première VNF et la seconde VNF satisfont la condition de mise à l'échelle commune.

20. Appareil selon l'une quelconque des revendications 17 à 19, dans lequel le KPI comprend un KPI de ressource et/ou un KPI de service, le KPI de ressource est utilisé pour indiquer une utilisation de ressource d'une VNF correspondante, et le KPI de service est utilisé pour indiquer un pourcentage d'un nombre d'utilisateurs accédant actuellement à la VNF correspondante dans un nombre maximal d'utilisateurs que la VNF correspondante peut tolérer.

21. Appareil selon l'une quelconque des revendications 18 à 20, dans lequel la deuxième unité de détermination (440) est spécifiquement configurée :
pour déterminer, en fonction d'une modification du KPI de ressource de la première VNF, que le retard de la réponse à la demande de l'utilisateur accédant à la première VNF est en forte corrélation positive avec le KPI de ressource de la première VNF ; ou
pour déterminer, en fonction d'une modification du KPI de service de la première VNF, que le retard de la réponse à la demande de l'utilisateur accédant à la première VNF est en forte corrélation positive avec le KPI de service de la première VNF.

22. Appareil selon la revendication 20 ou 21, dans lequel le KPI de ressource comprend les informations suivantes :
l'utilisation d'une unité centrale de traitement, UC, et/ou l'utilisation d'une mémoire et/ou l'utilisation d'un disque magnétique et/ou l'utilisation d'une bande passante de réseau.

23. Appareil selon l'une quelconque des revendications 17 à 22, dans lequel ledit appareil comprend en outre :
une seconde unité d'obtention (470), configurée :
pour obtenir, lorsqu'il est déterminé que le retard de la réponse à la demande de l'utilisateur accédant à la première VNF est en forte corrélation positive avec le KPI de la première VNF, un nombre d'utilisateurs accédant à la première VNF et un nombre de chaînes de fonction de service, SFC, traversant la seconde VNF ; et
une troisième unité de détermination (480), configurée :
pour déterminer, sur la base du nombre d'utilisateurs, une ressource satisfaisant le nombre d'utilisateurs ; et
pour déterminer, sur la base du nombre de SFC, une ressource satisfaisant le nombre de SFC ; et
l'unité de mise à l'échelle (420) est spécifiquement configurée :
pour mettre à l'échelle la première VNF et la seconde VNF simultanément sur la base de la ressource satisfaisant le nombre d'utilisateurs et de la ressource satisfaisant le nombre de SFC.

24. Appareil selon la revendication 23, dans lequel la SFC est une SFC affectée par une augmentation d'un nombre de demandes de l'utilisateur accédant à la première VNF.

25. Appareil selon la revendication 23 ou 24, dans lequel la ressource comprend les informations suivantes :
un nombre de machines virtuelles et/ou un nombre de puces et/ou une taille de mémoire et/ou une taille de disque dur et/ou une taille de carte d'interface réseau.

26. Appareil de mise à l'échelle de fonction de réseau virtualisée, comprenant :
une unité de réception (510), configurée pour recevoir des informations de notification de mise à l'échelle envoyées par une gestion et une orchestration, MANO, dans lequel les informations de notification de mise à l'échelle sont utilisées pour indiquer qu'un retard d'une réponse à une demande d'un utilisateur accédant à une première VNF est supérieur à un délai de tolérance de l'utilisateur, et une seconde VNF est une VNF en aval de la première VNF ;
une première unité de détermination (520), configurée :
pour déterminer, après réception des informations de notification de mise à l'échelle, que la seconde VNF ne peut pas satisfaire une exigence d'un utilisateur accédant à la seconde VNF ; et
une unité d'envoi (530), configurée pour envoyer une demande de mise à l'échelle aux MANO, dans lequel la demande de mise à l'échelle est utilisée par les MANO pour déterminer que la première VNF et la seconde VNF satisfont une condition de mise à l'échelle commune et pour mettre à l'échelle la première VNF et la seconde VNF, dans lequel un processus de mise à l'échelle de la première VNF et un processus de mise à l'échelle de la seconde VNF se chevauchent complètement ou se chevauchent partiellement, la condition de mise à l'échelle commune indique que la première VNF et la seconde VNF satisfont la condition de mise à l'échelle.

27. Appareil selon la revendication 26, dans lequel les informations de notification de mise à l'échelle sont spécifiquement utilisées pour indiquer que le retard de la réponse à la demande de l'utilisateur accédant à la première VNF est en forte corrélation positive avec un indicateur clé de performance, KPI, de la première VNF, et la première unité de détermination est spécifiquement configurée :
pour déterminer, lorsqu'un retard d'une réponse à une demande de l'utilisateur accédant à la seconde VNF est en faible corrélation positive avec un KPI de la seconde VNF, que la seconde VNF ne peut pas satisfaire l'exigence de l'utilisateur accédant à la seconde VNF.

28. Appareil selon la revendication 27, dans lequel le KPI comprend un KPI de ressource et/ou un KPI de service, le KPI de ressource est utilisé pour indiquer une utilisation de ressource d'une VNF correspondante, et le KPI de service est utilisé pour indiquer un pourcentage d'un nombre d'utilisateurs accédant actuellement à la VNF correspondante dans un nombre maximal d'utilisateurs que la VNF correspondante peut tolérer.

29. Appareil selon la revendication 28, dans lequel ledit appareil comprend en outre :
une unité d'obtention (540), configurée pour obtenir un KPI de ressource ou un KPI de service de la seconde VNFpour une pluralité de temps ; et
une deuxième unité de détermination (550), configurée :
pour déterminer, en fonction d'une modification du KPI de ressource de la seconde VNF, que le retard de la réponse à la demande de l'utilisateur accédant à la seconde VNF est en faible corrélation positive avec le KPI de ressource de la seconde VNF ; ou
pour déterminer, en fonction d'une modification du KPI de service de la seconde VNF, que le retard de la réponse à la demande de l'utilisateur accédant à la seconde VNF est en faible corrélation positive avec le KPI de service de la seconde VNF.

30. Appareil selon la revendication 28 ou 29, dans lequel le KPI de ressource comprend les informations suivantes :
l'utilisation d'une unité centrale de traitement, UC, et/ou l'utilisation d'une mémoire et/ou l'utilisation d'un disque magnétique et/ou l'utilisation d'une bande passante de réseau.
